(19) Europäisches Patentamt
European Patent Office
Office européen des brevets

(11) **EP 3 301 929 A1**

(12) **EUROPEAN PATENT APPLICATION**

(43) Date of publication:
**04.04.2018 Bulletin 2018/14**

(21) Application number: **16306263.1**

(22) Date of filing: **30.09.2016**

(51) Int Cl.:
*H04N 19/597* (2014.01)   *G06T 3/00* (2006.01)
*H04N 5/232* (2006.01)   *H04N 19/176* (2014.01)
*H04N 19/503* (2014.01)   *H04N 19/593* (2014.01)
*H04N 19/85* (2014.01)   *H04N 19/70* (2014.01)
*H04N 19/467* (2014.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• POIRIER, Tangi
  35576 Cesson-Sévigné Cedex (FR)
• GALPIN, Franck
  35576 Cesson-Sévigné Cedex (FR)
• LELEANNEC, Fabrice
  35576 Cesson-Sévigné Cedex (FR)

(74) Representative: **Huchet, Anne
TECHNICOLOR
1-5, rue Jeanne d'Arc
92130 Issy-les-Moulineaux (FR)**

(54) **METHOD AND APPARATUS FOR ENCODING AND DECODING A LARGE FIELD OF VIEW VIDEO**

(57)    A method for coding/decoding a large field of view video into a bitstream in an immersive rendering system is disclosed. At least one picture of said a large field of view video is represented as a surface, said surface being projected onto at least one 2D picture using a projection function. For at least one current block of said at least one 2D picture, at least one item of information representative of a modification of a 2D spatial neighborhood is determined according to said projection function. A group of neighboring blocks using said at least on item of information representative of a modification is determined and at least one part of encoding/decoding of said current block is performed using said determined group of neighboring blocks.

FIG. 20

EP 3 301 929 A1

**Description**

1. Technical field

The present disclosure relates to encoding and decoding immersive videos, for example when such immersive videos are processed in a system for virtual reality, augmented reality or augmented virtuality and for instance when displayed in a head mounted display device.

2. Background

Recently there has been a growth of available large field-of-view content (up to 360°). Such content is potentially not fully visible by a user watching the content on immersive display devices such as Head Mounted Displays, smart glasses, PC screens, tablets, smartphones and the like. That means that at a given moment, a user may only be viewing a part of the content. However, a user can typically navigate within the content by various means such as head movement, mouse movement, touch screen, voice and the like. It is typically desirable to encode and decode this content.

3. Summary

According to an aspect of the present principle, a method for coding a large field of view video into a bitstream is disclosed. At least one picture of said large field of view video being represented as a surface, said surface being projected onto at least one 2D picture using a projection function, said method comprising, for at least one current block of said at least one 2D picture:

- determining at least one item of information representative of a modification of a 2D spatial neighborhood, according to said projection function,
- determining a group of neighboring blocks using said at least on item of information representative of a modification,
- performing at least one part of encoding said current block using said determined group of neighboring blocks.

The present principle allows determining a new neighboring for a current block to be coded according to the projection function used to project the surface onto one or more pictures. At least one item of information representative of a modification is determined using the projection function used to project the surface onto a rectangular picture. Such an item of information representative of a modification describes modifications of a conventional 2D spatial causal neighboring of a block in a 2D picture so as to take into account continuities and discontinuities introduced by the projection of the surface onto a rectangular picture. The principle disclosed herein allows to adapt the neighboring of a current block as it is known from conventional coders by taking into account the modifications implied by the projection function. The adapted neighboring is then used for encoding the current block according to conventional 2D video coding schemes. Such an adapted neighboring can be used by all the coding modules of an encoder or by only some of these. Such an adaptation of the neighboring allows increasing compression efficiency of a 2D video coding scheme applied to a large field of view video.

According to another aspect of the present principle, an apparatus for coding a large field of view video into a bitstream is also disclosed. Such an apparatus comprises, for at least one block of said at least one 2D picture:

- means for determining at least one item of information representative of a modification of a 2D spatial neighborhood, according to said projection function,
- means for determining a group of neighboring blocks using said at least on item of information representative of a modification,
- means for performing at least one part of encoding said current block using said determined group of neighboring blocks.

According to another aspect of the present principle, a method for decoding a bitstream representative of a large field of view video is also disclosed. Said method comprises, for at least one current block of said at least one 2D picture:

- determining at least one item of information representative of a modification of a 2D spatial neighborhood, according to said projection function,
- determining a group of neighboring blocks using said at least on item of information representative of a modification,
- performing at least one part of decoding said current block from said bitstream, using said determined group of neighboring blocks.

According to another aspect of the present principle, an apparatus for decoding a bitstream representative of a large field of view video is disclosed. Such an apparatus comprises, for at least one current block of said at least one 2D picture:

- means for determining at least one item of information representative of a modification of a 2D spatial neighborhood, according to said projection function,
- means for determining a group of neighboring blocks using said at least on item of information representative of a modification,
- means for performing at least one part of decoding said current block from said bitstream, using said determined group of neighboring blocks.

According to an embodiment of the present disclosure, said at least one item of information representative of a modification, is stored in association with at least said one part of encoding or at least one part of said decoding in a neighbor replacement table. Such an embodiment allows to activate/deactivate neighboring blocks according to the encoding modules or decoding modules processing the block, such as most probable mode determination for intra prediction, intra prediction, motion vector prediction, motion vector derivation, deblocking filtering, sample adaptive offset process, etc... Therefore, the neighboring of a block is thus adapted according to the performed encoding/decoding modules processing the block.

According to another embodiment of the present disclosure, said part of encoding/decoding may correspond to determining a predicted block using at least one sample of a block belonging to said group of neighboring blocks, determining of a most probable mode list for coding/decoding an intra prediction mode for said at least one current block, deriving a motion vector predictor for coding/decoding a motion vector for said at least one current block, deriving a motion vector for coding/decoding a motion vector for said at least one current block, deblocking filtering between at least said one current block and a block belonging to said group of neighboring block, sample adaptive offset filtering between at least one sample of said at least one current block and at least one sample of a block belonging to said group of neighboring block.

According to another embodiment of the present disclosure, said part of encoding/decoding corresponds determining a list of predictors for coding said current block, wherein determining said list of predictors uses at least one predictor from a neighboring block belonging to said group of neighboring blocks, said neighboring block being located below, or on the right or on the right-below of said current block.

According to a variant, said list of predictors corresponds to a most probable mode list of intra prediction mode for coding/decoding an intra prediction mode for said current block or to a motion vector predictor list for coding/decoding a motion vector for said current block.

According to another embodiment of the present disclosure, said 2D picture comprises at least one region of blocks, and said at least one item of information representative of a modification is stored in said neighbor replacement table for a current region to which said current block belongs. Said at least one item of information representative of a modification belongs to a group comprising at least:

- a neighbor replacing region to be used instead of a neighbor region spatially adjacent to said current region in said 2D picture for determining said group of neighboring blocks,
- a neighbor replacing region to be used instead of a non-available region spatially adjacent to said current region in said 2D picture for determining said group of neighboring blocks,
- an empty replacing region to be used instead of a neighbor region spatially adjacent to said current region in said 2D picture for determining said group of neighboring blocks, wherein said empty replacing region is a region comprising zero block from said 2D picture.

According to another embodiment of the present disclosure, said item of information representative of a modification is stored in association with a transformation parameter to be applied to a neighbor replacing region.

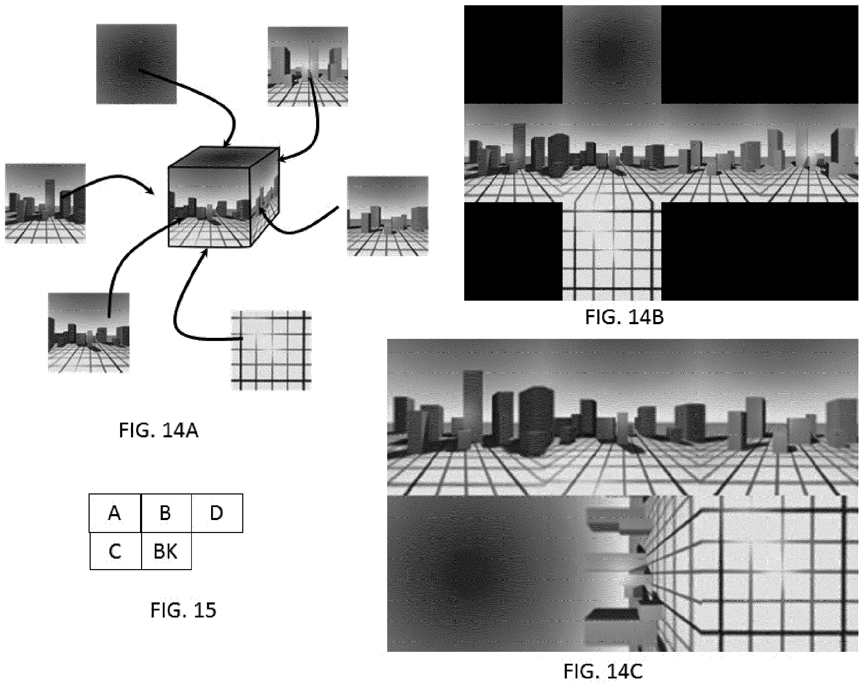

This embodiment allows taking into account transformation that may have occurred to regions to the surface when projected to a 2D picture or when the regions for the surface, or faces in case of a cube, are re-arranged in the 2D picture. As an example, faces top, back and bottom from the cube illustrated in figure 14A are rotated by an angle of 90° in the inverse-clock-wise sense when re-arranged on the 2D picture illustrated in figure 14C.

According to another embodiment of the present disclosure, said neighbor replacement table is coded into said bitstream or decoded from said bitstream.

According to another embodiment of the present disclosure, said neighbor replacement table is coded into a Sequence Parameter Set (SPS) syntax element such as defined by an H.264/AVC standard or an HEVC standard, or a Picture Parameter Set (PPS) syntax element such as defined by an H.264/AVC standard or an HEVC standard, or a Slice Header syntax element corresponding to said picture, such as defined by an H.264/AVC standard or an HEVC standard.

According to another embodiment of the present disclosure, said neighbor replacement table is generated at the decoder from an item of information relating to said projection function decoded from said bitstream.

According to another aspect of the present principle, a bitstream representative of a coded large field of view video is disclosed. Said bitstream comprising coded data representative of at least one current block of said 2D picture, said current block being coded using a group of neighboring blocks determined using at least one item of information representative of a modification determined according to said projection function.

According to an embodiment of the present disclosure, said bitstream comprises also coded data representative of a neighbor replacement table storing said at least one item of information representative of a modification.

According to another embodiment of the present disclosure, said bitstream comprises also coded data representative of at least one item of information relating to said projection function used for generating a neighbor replacement table storing said at least one item of information representative of a modification.

A bitstream according to any one of the embodiments disclosed herein may be stored on a non-transitory processor readable medium.

According to another aspect of the present principle, an immersive rendering device comprising an apparatus for decoding a bitstream representative of a large field of view video according is disclosed. According to another aspect of the present principle, a system for immersive rendering of a large field of view video encoded into a bitstream is disclosed. Such a system comprises at least a network interface for receiving said bitstream from a data network, an apparatus for decoding said bitstream according to any one of the embodiments disclosed herein, an immersive rendering device for rendering said decoded large field of view video.

According to one implementation, the different steps of the method for coding a large field of view video or decoding a large field of view video as described here above are implemented by one or more software programs or software module programs comprising software instructions intended for execution by a data processor of an apparatus for coding/decoding a large field of view video, these software instructions being designed to command the execution of the different steps of the methods according to the present principles.

A computer program is also disclosed that is capable of being executed by a computer or by a data processor, this program comprising instructions to command the execution of the steps of a method for coding a large field of view video or of the steps of a method for decoding a large field of view video as mentioned here above.

This program can use any programming language whatsoever and be in the form of source code, object code or intermediate code between source code and object code, such as in a partially compiled form or any other desirable form whatsoever.

The information carrier can be any entity or apparatus whatsoever capable of storing the program. For example, the carrier can comprise a storage means such as a ROM, for example a CD ROM or a microelectronic circuit ROM or again a magnetic recording means, for example a floppy disk or a hard disk drive.

Again, the information carrier can be a transmissible carrier such as an electrical or optical signal which can be conveyed via an electrical or optical cable, by radio or by other means. The program according to the present principles can be especially uploaded to an Internet type network.

As an alternative, the information carrier can be an integrated circuit into which the program is incorporated, the circuit being adapted to executing or to being used in the execution of the methods in question.

According to one embodiment, the methods/apparatus may be implemented by means of software and/or hardware components. In this respect, the term "module" or "unit" can correspond in this document equally well to a software component and to a hardware component or to a set of hardware and software components.

A software component corresponds to one or more computer programs, one or more subprograms of a program or more generally to any element of a program or a piece of software capable of implementing a function or a set of functions as described here below for the module concerned. Such a software component is executed by a data processor of a physical entity (terminal, server, etc.) and is capable of accessing hardware resources of this physical entity (memories, recording media, communications buses, input/output electronic boards, user interfaces, etc.).

In the same way, a hardware component corresponds to any element of a hardware unit capable of implementing a function or a set of functions as described here below for the module concerned. It can be a programmable hardware component or a component with an integrated processor for the execution of software, for example an integrated circuit, a smartcard, a memory card, an electronic board for the execution of firmware, etc.

In addition to omnidirectional video, the present principles also apply to large field of view video content, e.g. 180°.

4. Brief description of the drawings

Figure 1 represents a functional overview of an encoding and decoding system according to apreferred environment of the embodiments of the disclosure,

Figure 2 represents a first embodiment of a system according to the present disclosure,

Figure 3 represents a first embodiment of a system according to the present disclosure,

Figure 4 represents a first embodiment of a system according to the present disclosure,

Figure 5 represents a first embodiment of a system according to the present disclosure,

Figure 6 represents a first embodiment of a system according to the present disclosure,

Figure 7 represents a first embodiment of a system according to the present disclosure,

Figure 8 represents a first embodiment of a system according to the present disclosure,

Figure 9 represents a first embodiment of a system according to the present disclosure,

Figure 10 represents a first embodiment of an immersive video rendering device according to the present disclosure,

Figure 11 represents a first embodiment of an immersive video rendering device according to the present disclosure,

Figure 12 represents a first embodiment of an immersive video rendering device according to the present disclosure,

Figure 13 illustrates an example of projection from a spherical surface S onto a rectangular picture F,

Figure 14A illustrates an example of projection from a cubic surface S onto 6 pictures,

Figure 14B, 14C illustrates corresponding re-arranged rectangular pictures according to different layouts,

Figure 15 illustrates causal spatial neighborhood from a conventional video coding scheme,

Figure 16A illustrates a rectangular picture onto which an omnidirectional video represented as a sphere has been projected using an equi-rectangular projection,

Figure 16B a rectangular picture onto which the six faces of a cube representing an omnidirectional video have been re-arranged according to the layout illustrated in figure 16C.

Figure 17 illustrates block diagram of an exemplary method for coding a current block of a 2D picture representative of a 3D picture of an omnidirectional video, into a bitstream according to an embodiment of the present disclosure,

Figure 18 illustrates the 6 regions of a 2D picture defined for a projected cube,

Figure 19 illustrates neighboring blocks location for a current block of a 2D picture in case of a cube projection,

Figure 20 illustrates a block diagram of an exemplary method for deriving neighboring blocks for a current block of a 2D picture,

Figure 21 illustrates neighboring regions location for a 2D picture in case of an equi-rectangular projection,

Figure 22 illustrates block diagrams for an exemplary method for coding an omnidirectional video into a bitstream according to an embodiment of the present disclosure,

Figure 23 illustrates additional neighboring blocks location of a 2D picture in case of a cube projection,

Figures 24A and B illustrate motion vector adaptation according to an embodiment of the present disclosure,

Figures 25A, B, and C illustrate neighboring blocks in case of deblocking filtering process according to an embodiment of the present disclosure,

Figures 26A and B illustrates new neighboring blocks for a current block according to an embodiment of the present disclosure,

Figure 27 illustrates block diagrams of an exemplary method for decoding a current block of a 2D picture representative of a 3D picture of an omnidirectional video, from a bitstream according to an embodiment of the present disclosure,

Figure 28 illustrates block diagrams of an exemplary method for decoding a current block of a 2D picture representative of a 3D picture of an omnidirectional video, from a bitstream according to another embodiment of the present disclosure,

Figure 29 illustrates block diagrams for an exemplary method for decoding a bitstream representative of an omnidirectional video according to an embodiment of the present disclosure,

Figure 30 illustrates an exemplary apparatus for encoding an omnidirectional videos into a bitstream according to one embodiment,

Figure 31 illustrates an exemplary apparatus for decoding a bitstream representative of an omnidirectional videos according to one embodiment.

## 5. Detailed description

A large field-of-view content may be, among others, a three-dimension computer graphic imagery scene (3D CGI scene), a point cloud or an immersive video. Many terms might be used to design such immersive videos such as for example Virtual Reality (VR), 360, panoramic, $4\pi$ steradians, immersive, omnidirectional, large field of view.

For coding an omnidirectional video into a bitstream, for instance for transmission over a data network, traditional video codec, such as HEVC, H.264/AVC, could be used. Each picture of the omnidirectional video is thus first projected on one or more 2D pictures, for example one or more rectangular pictures, using a suitable projection function. In practice, a picture from the omnidirectional video is represented as a 3D surface. For ease of projection, usually a convex and simple surface such as a sphere, or a cube, or a pyramid are used for the projection. The projected 2D pictures representative of the omnidirectional video are then coded using a traditional video codec.

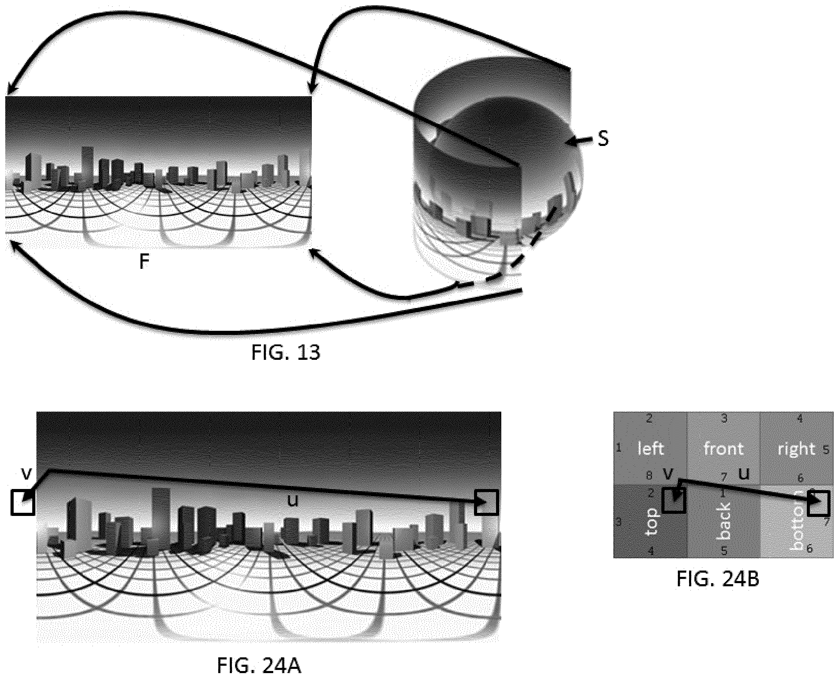

Figure 13 shows an example of projecting a frame of an omnidirectional video mapped on a surface S represented as a sphere onto one rectangular picture I using an equi-rectangular projection.

Figure 14A shows another example of projecting a frame of an omnidirectional video mapped on a surface S, here represented as a cube, onto six pictures or faces. The faces can possibly be re-arranged into one rectangular picture as shown in figures 14B or 14C.

The projection of the 3D surface on one or more rectangular pictures inevitably introduces some effects that may impact the compression efficiency when encoding the resulting video. Indeed the projection may introduce the followings effects:
- Strong geometry distortions:
  - straight lines are not straight anymore,
  - orthonormal coordinate system are not orthonormal anymore
- Non uniform pixel density: a pixel in the picture to encode does not always represent the same surface on the surface to encode (e.g. a pole of a sphere may be represented by a line of pixels in the 2D image),
- Strong discontinuities: the picture layout may introduce strong discontinuities between 2 adjacent pixels on the surface,
- Some periodicity may occur in the picture (for example from one border to the opposite one). Table 1 lists examples of such effects for various projection functions. Some of these effects may appear on projected pictures illustrated in figures 13, 14B and 14C.

**Table 1**

| Type | Equirectangular (fig 1) | Cube projection (fig 2) | Pyramidal (fig 3) |
|---|---|---|---|
| 3D surface | sphere | cube | Pyramid |
| Straight lines | Continuously distorted | Piece wise straight | Piece-wise straight |
| Orthonormal local picture | no | Yes, except on face boundaries | No, except on square face, |
| Pixel density | Non uniform (higher on equator line) | Almost constant | No except on square face |
| Discontinuities | no | Yes, on each face boundaries | Yes, on each face boundaries |
| Periodicity | Yes, horizontal | Yes, between some faces | Yes, between some faces |

In standards such as HEVC, H.264/AVC, etc., a picture is encoded by first dividing it into small non-overlapping blocks and then by encoding those blocks individually. For reducing redundancies, conventional video coders use causal spatial neighboring blocks data for predicting the values of a current block to code. An example of such causal spatial neighboring blocks is illustrated on figure 15 wherein a current block BK to be encoded has 4 neighboring blocks: A, B, C and D which have already been coded/decoded and are available for use. Such neighborhood may be used for intra prediction, most probable coding mode determination (known as MPM determination in HEVC, H.264/AVC), motion vector prediction in inter picture coding. Such a neighborhood may be also be used for filtering a current block after encoding such as in a deblocking filtering process or a sample adaptive offset process (also known as SAO in HEVC). Depending on the process to be performed, other causal spatial/temporal neighborhood may be used.

Causal spatial neighboring blocks are to be understood as blocks that have been already coded and decoded according to a scan order of the pictures, (e.g. a raster scan order).

When a 3D surface representing an omnidirectional video is projected on a rectangular picture, several cases of continuity/discontinuity may appear.

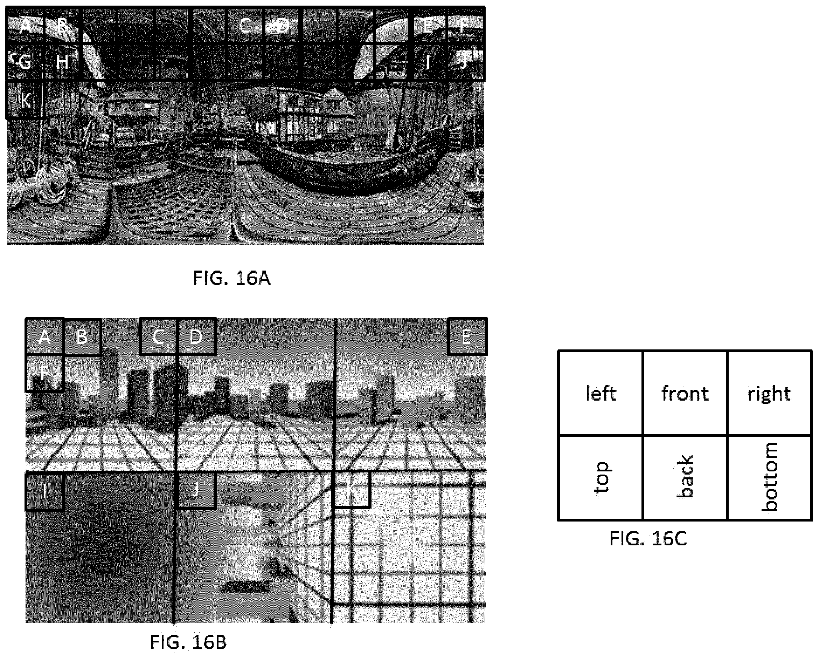

As an example, a block on the 3D surface of an omnidirectional video may have spatial neighborhood, but such causal spatial neighborhood may be lost or part of it may be lost after projection of the omnidirectional video onto a rectangular pictures. Figure 16A illustrates a rectangular picture onto which an omnidirectional video represented as a sphere has been projected using an equi-rectangular projection. On a sphere, blocks A, B, C and D are spatially adjacent in the region located on top of the sphere. However, on the projected picture illustrated on figure 16A, blocks A, B, C, and D positioned on the first row of the rectangular pictures are not spatial neighbors anymore and such blocks cannot benefit from the prediction provided by spatial neighboring blocks located above those blocks according to traditional video coders neighboring techniques. A similar case arises for blocks located on the left and right columns of the picture which cannot benefit from the prediction provided by left and top-left spatial neighbors.

Similar problems also arises when representing an omnidirectional video as a 3D cube and re-arranging the projected 6 faces of the cube on a rectangular picture illustrated in figure 16B and using a layout illustrated on figure 16C.

On figure 16B, black lines are illustrated to distinguish each face of the cube. It appears for example that block I from the top face cannot benefit from spatial prediction of a neighboring block D from front face although in the cube representation corresponding blocks I and D are spatially adjacent. Furthermore, some discontinuities among causal spatial neighboring blocks appears at the edge of faces. As an example, blocks J and K from back and bottom faces and other blocks from the same row present strong discontinuities with their spatial top neighbors in the re-arranged picture. Such discontinuities would lead to poor compression performances when using such neighboring blocks for prediction.

Therefore, there is a need for a novel encoding and decoding method of omnidirectional videos.
The present principle is disclosed here in the case of omnidirectional video. It may also be applied in case of conventional plane images acquired with very large field of view, i.e. acquired with very small focal length like fish eye lens. As an example, the present principle may apply to 180° video.

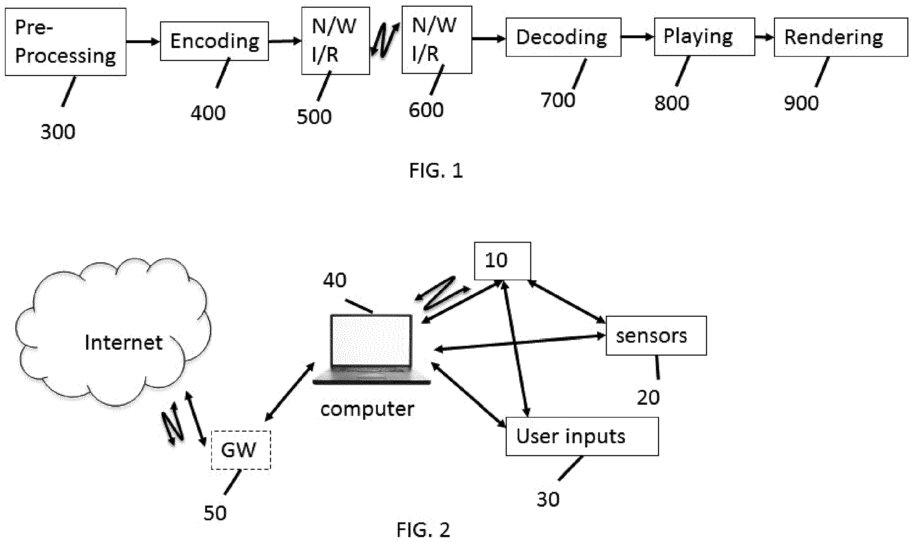

Figure 1 illustrates a general overview of an encoding and decoding system according to an example embodiment. The system of figure 1 is a functional system. A pre-processing module 300 may prepare the content for encoding by the encoding device 400. The pre-processing module 300 may perform multi-image acquisition, merging of the acquired multiple images in a common space (typically a 3D sphere if we encode the directions), and mapping of the 3D sphere into a 2D frame using, for example, but not limited to, an equi-rectangular mapping or a cube mapping. The pre-processing module 300 may also accept an omnidirectional video in a particular format (for example, equirectangular) as input, and pre-processes the video to change the mapping into a format more suitable for encoding. Depending on the acquired video data representation, the pre-processing module may perform a mapping space change. The encoding device 400 and the encoding method will be described with respect to other figures of the specification. After being encoded, the data, which may encode immersive video data or 3D CGI encoded data for instance, are sent to a network interface 500, which can be typically implemented in any network interface, for instance present in a gateway. The data are then transmitted through a communication network, such as internet but any other network can be foreseen. Then the data are received via network interface 600. Network interface 600 can be implemented in a gateway, in a television, in a set-top box, in a head mounted display device, in an immersive (projective) wall or in any immersive video rendering device. After reception, the data are sent to a decoding device 700. Decoding function is one of the processing functions described in the following figures 2 to 12. Decoded data are then processed by a player 800. Player 800 prepares the data for the rendering device 900 and may receive external data from sensors or users input data. More precisely, the player 800 prepares the part of the video content that is going to be displayed by the rendering device 900. The decoding device 700 and the player 800 may be integrated in a single device (e.g., a smartphone, a game console, a STB, a tablet, a computer, etc.). In a variant, the player 800 is integrated in the rendering device 900.

Several types of systems may be envisioned to perform the decoding, playing and rendering functions of an immersive display device, for example when rendering an immersive video.

A first system, for processing augmented reality, virtual reality, or augmented virtuality content is illustrated in figures 2 to 6. Such a system comprises processing functions, an immersive video rendering device which may be a head-mounted display (HMD), a tablet or a smartphone for example and may comprise sensors. The immersive video rendering device may also comprise additional interface modules between the display device and the processing functions. The processing functions can be performed by one or several devices. They can be integrated into the immersive video rendering device or they can be integrated into one or several processing devices. The processing device comprises one or several processors and a communication interface with the immersive video rendering device, such as a wireless or wired communication interface.

The processing device can also comprise a second communication interface with a wide access network such as internet and access content located on a cloud, directly or through a network device such as a home or a local gateway. The processing device can also access a local storage through a third interface such as a local access network interface of Ethernet type. In an embodiment, the processing device may be a computer system having one or several processing units. In another embodiment, it may be a smartphone which can be connected through wired or wireless links to the immersive video rendering device or which can be inserted in a housing in the immersive video rendering device and communicating with it through a connector or wirelessly as well. Communication interfaces of the processing device are wireline interfaces (for example a bus interface, a wide area network interface, a local area network interface) or wireless interfaces (such as an IEEE 802.11 interface or a Bluetooth® interface).

When the processing functions are performed by the immersive video rendering device, the immersive video rendering device can be provided with an interface to a network directly or through a gateway to receive and/or transmit content.

In another embodiment, the system comprise an auxiliary device which communicates with the immersive video rendering device and with the processing device. In such an embodiment, this auxiliary device can contain at least one of the processing functions.

The immersive video rendering device may comprise one or several displays. The device may employ optics such as lenses in front of each of its display. The display can also be a part of the immersive display device like in the case of smartphones or tablets. In another embodiment, displays and optics may embedded in a helmet, in glasses, or in a visor that a user can wear. The immersive video rendering device may also integrate several sensors, as described later on. The immersive video rendering device can also comprise several interfaces or connectors. It might comprise one or several wireless modules in order to communicate with sensors, processing functions, handheld or other body parts related devices or sensors.

The immersive video rendering device can also comprise processing functions executed by one or several processors and configured to decode content or to process content. By processing content here, it is understood all functions to prepare a content that can be displayed. This may comprise, for instance, decoding a content, merging content before displaying it and modifying the content to fit with the display device.

One function of an immersive content rendering device is to control a virtual camera which captures at least a part of the content structured as a virtual volume. The system may comprise pose tracking sensors which totally or partially track the user's pose, for example, the pose of the user's head, in order to process the pose of the virtual camera. Some positioning sensors may track the displacement of the user. The system may also comprise other sensors related to environment for example to measure lighting, temperature or sound conditions. Such sensors may also be related to the users' bodies, for instance, to measure sweating or heart rate. Information acquired through these sensors may be used to process the content. The system may also comprise user input devices (e.g. a mouse, a keyboard, a remote control, a joystick). Information from user input devices may be used to process the content, manage user interfaces or to control the pose of the virtual camera. Sensors and user input devices communicate with the processing device and/or with the immersive rendering device through wired or wireless communication interfaces.

Using figures 2 to 6, several embodiments are described of this first type of system for displaying augmented reality, virtual reality, augmented virtuality or any content from augmented reality to virtual reality. Figure 2 illustrates a particular embodiment of a system configured to decode, process and render immersive videos. The system comprises an immersive video rendering device 10, sensors 20, user inputs devices 30, a computer 40 and a gateway 50 (optional).

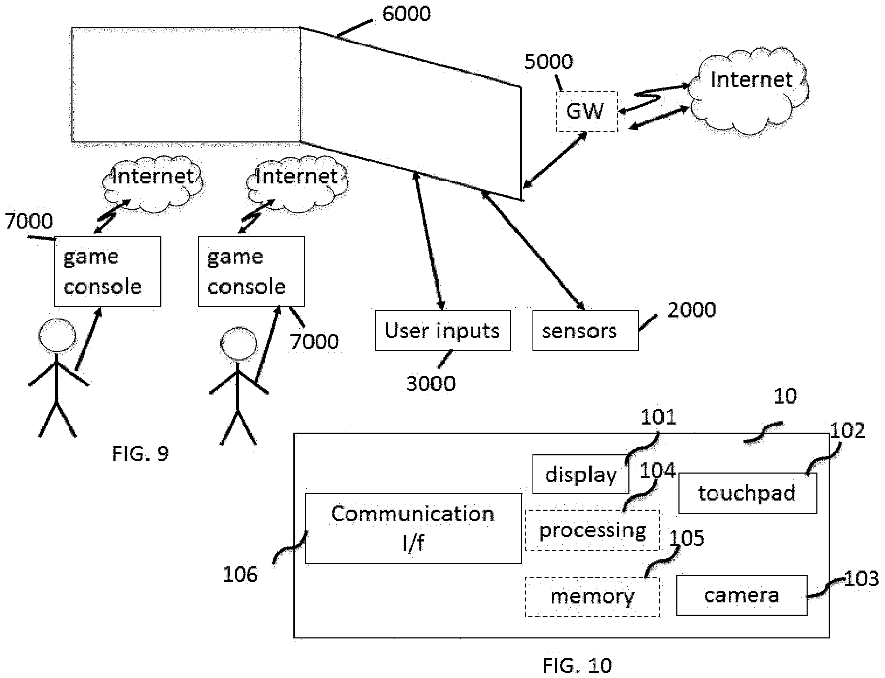

The immersive video rendering device 10, illustrated on Figure 10, comprises a display 101. The display is, for example of OLED or LCD type. The immersive video rendering device 10 is, for instance a HMD, a tablet or a smartphone. The device 10 may comprise a touch surface 102 (e.g. a touchpad or a tactile screen), a camera 103, a memory 105 in connection with at least one processor 104 and at least one communication interface 106. The at least one processor 104 processes the signals received from the sensors 20. Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement. Sensors 20 and user input devices 30 data can also be transmitted to the computer 40 which will process the data according to the input of these sensors.

Memory 105 includes parameters and code program instructions for the processor 104. Memory 105 can also comprise parameters received from the sensors 20 and user input devices 30. Communication interface 106 enables the immersive video rendering device to communicate with the computer 40. The Communication interface 106 of the processing device is wireline interfaces (for example a bus interface, a wide area network interface, a local area network interface) or wireless interfaces (such as an IEEE 802.11 interface or a Bluetooth® interface). Computer 40 sends data and optionally control commands to the immersive video rendering device 10. The computer 40 is in charge of processing the data, i.e. prepare them for display by the immersive video rendering device 10. Processing can be done exclusively by the computer 40 or part of the processing can be done by the computer and part by the immersive video rendering device 10. The computer 40 is connected to internet, either directly or through a gateway or network interface 50. The computer 40 receives data representative of an immersive video from the internet, processes these data (e.g. decodes them and possibly prepares the part of the video content that is going to be displayed by the immersive video rendering device 10) and sends the processed data to the immersive video rendering device 10 for display. In a variant, the system may also comprise local storage (not represented) where the data representative of an immersive video are stored, said local storage can be on the computer 40 or on a local server accessible through a local area network for instance (not represented).

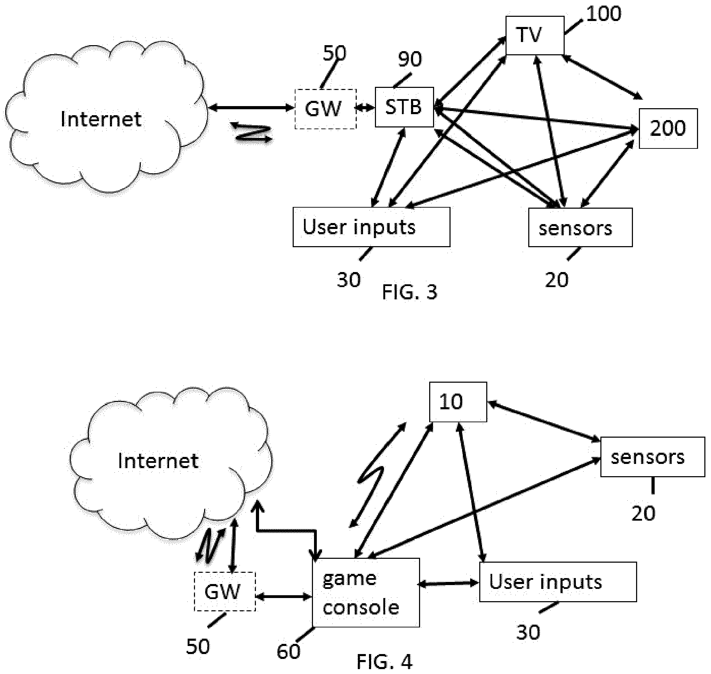

Figure 3 represents a second embodiment. In this embodiment, a STB 90 is connected to a network such as internet directly (i.e. the STB 90 comprises a network interface) or via a gateway or network interface 50. The STB 90 is connected through a wireless interface or through a wired interface to rendering devices such as a television set 100 or an immersive video rendering device 200. In addition to classic functions of a STB, STB 90 comprises processing functions to process video content for rendering on the television 100 or on any immersive video rendering device 200.

These processing functions are the same as the ones that are described for computer 40 and are not described again here. Sensors 20 and user input devices 30 are also of the same type as the ones described earlier with regards to Figure 2. The STB 90 obtains the data representative of the immersive video from the internet. In a variant, the STB 90 obtains the data representative of the immersive video from a local storage (not represented) where the data representative of the immersive video are stored, said local storage can be on a local server accessible through a local area network for instance (not represented).

Figure 4 represents a third embodiment related to the one represented in Figure 2. The game console 60 processes the content data. Game console 60 sends data and optionally control commands to the immersive video rendering device 10. The game console 60 is configured to process data representative of an immersive video and to send the processed data to the immersive video rendering device 10 for display. Processing can be done exclusively by the game console 60 or part of the processing can be done by the immersive video rendering device 10.

The game console 60 is connected to internet, either directly or through a gateway or network interface 50. The game console 60 obtains the data representative of the immersive video from the internet. In a variant, the game console 60 obtains the data representative of the immersive video from a local storage (not represented) where the data representative of the immersive video are stored, said local storage can be on the game console 60 or on a local server accessible through a local area network for instance (not represented).

The game console 60 receives data representative of an immersive video from the internet, processes these data (e.g. decodes them and possibly prepares the part of the video that is going to be displayed) and sends the processed data to the immersive video rendering device 10 for display. The game console 60 may receive data from sensors 20 and user input devices 30 and may use them to process the data representative of an immersive video obtained from the internet or from the from the local storage.

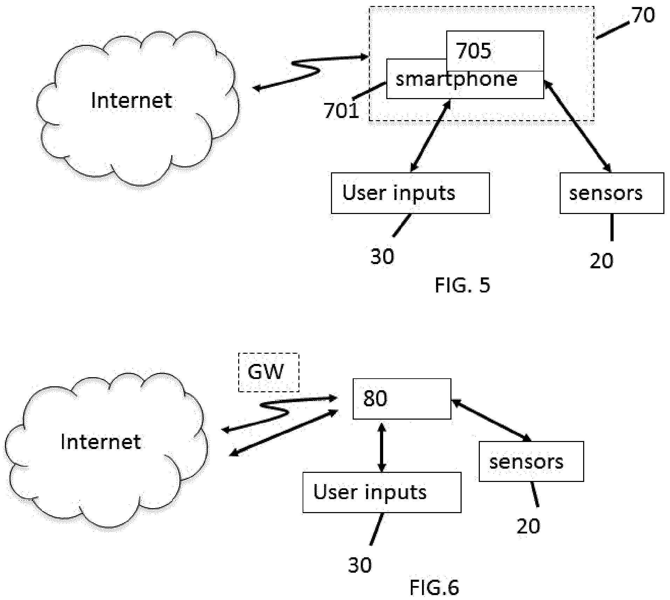

Figure 5 represents a fourth embodiment of said first type of system where the immersive video rendering device 70 is formed by a smartphone 701 inserted in a housing 705. The smartphone 701 may be connected to internet and thus may obtain data representative of an immersive video from the internet. In a variant, the smartphone 701 obtains data representative of an immersive video from a local storage (not represented) where the data representative of an immersive video are stored, said local storage can be on the smartphone 701 or on a local server accessible through a local area network for instance (not represented).

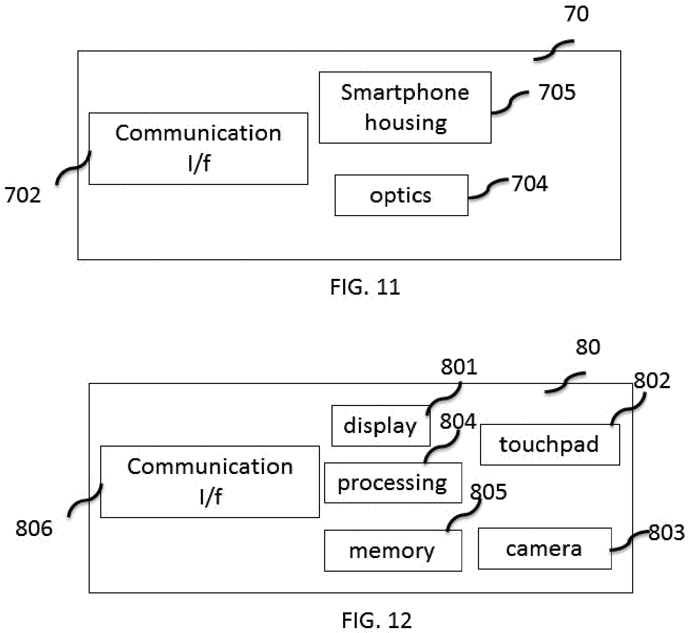

Immersive video rendering device 70 is described with reference to Figure 11 which gives a preferred embodiment of immersive video rendering device 70. It optionally comprises at least one network interface 702 and the housing 705 for the smartphone 701. The smartphone 701 comprises all functions of a smartphone and a display. The display of the smartphone is used as the immersive video rendering device 70 display. Therefore no display other than the one of the smartphone 701 is included. However, optics 704, such as lense, are included for seeing the data on the smartphone display. The smartphone 701 is configured to process (e.g. decode and prepare for display) data representative of an immersive video possibly according to data received from the sensors 20 and from user input devices 30. Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement.

Figure 6 represents a fifth embodiment of said first type of system in which the immersive video rendering device 80 comprises all functionalities for processing and displaying the data content. The system comprises an immersive video rendering device 80, sensors 20 and user input devices 30. The immersive video rendering device 80 is configured to process (e.g. decode and prepare for display) data representative of an immersive video possibly according to data received from the sensors 20 and from the user input devices 30. The immersive video rendering device 80 may be connected to internet and thus may obtain data representative of an immersive video from the internet. In a variant, the immersive video rendering device 80 obtains data representative of an immersive video from a local storage (not represented) where the data representative of an immersive video are stored, said local storage can be on the immersive video rendering device 80 or on a local server accessible through a local area network for instance (not represented).

The immersive video rendering device 80 is illustrated on Figure 12. The immersive video rendering device comprises a display 801. The display can be for example of OLED or LCD type, a touchpad (optional) 802, a camera (optional) 803, a memory 805 in connection with at least one processor 804 and at least one communication interface 806. Memory 805 comprises parameters and code program instructions for the processor 804. Memory 805 can also comprise parameters received from the sensors 20 and user input devices 30. Memory can also be large enough to store the data representative of the immersive video content. Memory 805 may be of different types (SD card, hard disk, volatile or non-volatile memory...). Communication interface 806 enables the immersive video rendering device to communicate with internet network. The processor 804 processes data representative of the video in order to display them of display 801. The camera 803 captures images of the environment for an image processing step. Data are extracted from this step in order to control the immersive video rendering device.

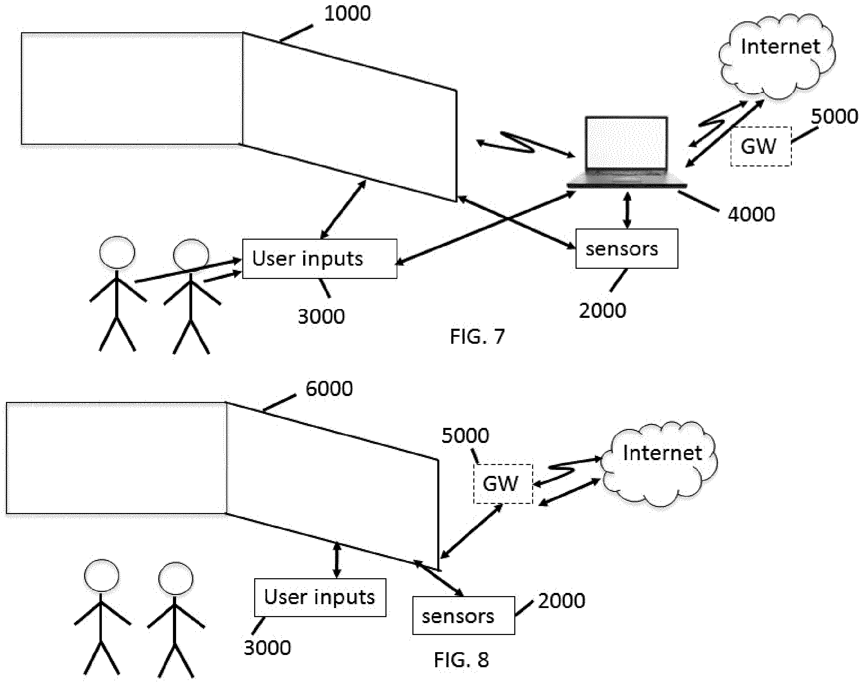

A second system, for processing augmented reality, virtual reality, or augmented virtuality content is illustrated in figures 7 to 9. Such a system comprises an immersive wall.

Figure 7 represents a system of the second type. It comprises a display 1000 which is an immersive (projective) wall which receives data from a computer 4000. The computer 4000 may receive immersive video data from the internet. The computer 4000 is usually connected to internet, either directly or through a gateway 5000 or a network interface. In a variant, the immersive video data are obtained by the computer 4000 from a local storage (not represented) where the data representative of an immersive video are stored, said local storage can be in the computer 4000 or in a local server accessible through a local area network for instance (not represented).

This system may also comprise sensors 2000 and user input devices 3000.The immersive wall 1000 can be of OLED or LCD type. It can be equipped with one or several cameras. The immersive wall 1000 may process data received from the sensor 2000 (or the plurality of sensors 2000). The data received from the sensors 2000 may be related to lighting conditions, temperature, environment of the user, e.g. position of objects.

The immersive wall 1000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

Sensors 2000 and user input devices 3000 data may also be transmitted to the computer 4000. The computer 4000 may process the video data (e.g. decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection.

Computer 4000 sends the processed data and optionally control commands to the immersive wall 1000. The computer 4000 is configured to process the data, i.e. preparing them for display, to be displayed by the immersive wall 1000. Processing can be done exclusively by the computer 4000 or part of the processing can be done by the computer 4000 and part by the immersive wall 1000.

Figure 8 represents another system of the second type. It comprises an immersive (projective) wall 6000 which is configured to process (e.g. decode and prepare data for display) and display the video content. It further comprises sensors 2000, user input devices 3000.

The immersive wall 6000 receives immersive video data from the internet through a gateway 5000 or directly from internet. In a variant, the immersive video data are obtained by the immersive wall 6000 from a local storage (not represented) where the data representative of an immersive video are stored, said local storage can be in the immersive wall 6000 or in a local server accessible through a local area network for instance (not represented).

This system may also comprise sensors 2000 and user input devices 3000.The immersive wall 6000 can be of OLED or LCD type. It can be equipped with one or several cameras. The immersive wall 6000 may process data received from the sensor 2000 (or the plurality of sensors 2000). The data received from the sensors 2000 may be related to lighting conditions, temperature, environment of the user, e.g. position of objects.

The immersive wall 6000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

The immersive wall 6000 may process the video data (e.g. decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection. The immersive wall 6000 may comprise at least one communication interface to communicate with the sensors and with internet.

Figure 9 illustrates a third embodiment where the immersive wall is used for gaming. One or several gaming consoles 7000 are connected, preferably through a wireless interface to the immersive wall 6000. The immersive wall 6000 receives immersive video data from the internet through a gateway 5000 or directly from internet. In a variant, the immersive video data are obtained by the immersive wall 6000 from a local storage (not represented) where the data representative of an immersive video are stored, said local storage can be in the immersive wall 6000 or in a local server accessible through a local area network for instance (not represented).

Gaming console 7000 sends instructions and user input parameters to the immersive wall 6000. Immersive wall 6000 processes the immersive video content possibly according to input data received from sensors 2000 and user input devices 3000 and gaming consoles 7000 in order to prepare the content for display. The immersive wall 6000 may also comprise internal memory to store the content to be displayed. The immersive wall 6000 can be of OLED or LCD type. It can be equipped with one or several cameras.

The data received from the sensors 2000 may be related to lighting conditions, temperature, environment of the user, e.g. position of objects. The immersive wall 6000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

The immersive wall 6000 may process the immersive video data (e.g. decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection. The immersive wall 6000 may comprise at least one communication interface to communicate with the sensors and with internet.

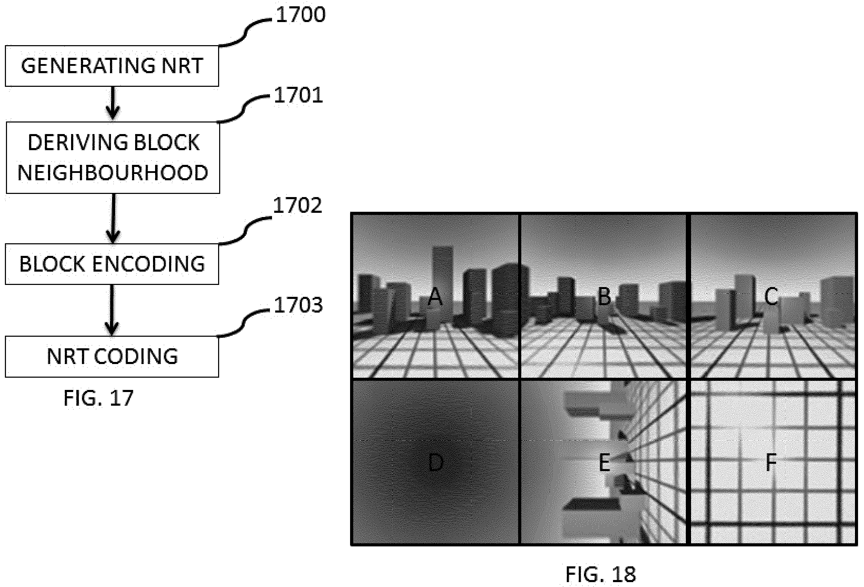

Figure 17 illustrates block diagram of an exemplary method for coding a current block of a 2D picture representative of a 3D picture of an omnidirectional video, into a bitstream according to an embodiment of the present disclosure. At least one picture of said omnidirectional video is represented as a 3D surface, such as a sphere or a cube, such a disclosed above. However, the present principle could be applied to any 3D representation of an omnidirectional video. The 3D surface is projected onto at least one 2D picture using a projection function. For instance, such a projection function could be an equirectangular projection or other type of projection function. The 2D resulting picture is then divided into non-overlapping blocks of pixel. The method is here disclosed for at least one current block of the 2D picture to be encoded using a conventional 2D video coding scheme. The present principle is disclosed in the case of an HEVC video coding scheme. However, the present principle could also be applied to any conventional block-based video/picture coding scheme.

In a step 1700, at least one item of information representative of a modification of a 2D spatial neighborhood for a region of the 2D picture is determined according to the projection function.

According to an embodiment of the present disclosure, determining at least one item of information representative of a modification of 2D spatial neighborhood may be performed by generating a neighboring replacement table, also called NRT table in the present disclosure, taking into account continuities and discontinuities introduced by the projection function used to project the a picture of the omnidirectional video onto the 2D picture. Such an NRT table is further used to adapt the derivation of neighbor's information as it is used by the different coding modules of an HEVC codec for encoding a current block of the 2D picture.

The NRT table allows to describe the new neighboring information (continuity added or removed, discontinuity added or removed) for a region of the 2D picture.

According to HEVC, a 2D picture is subdivided into a set of coding tree units (CTU). One CTU comprises a coding tree block (CTB) of luminance samples and two coding tree blocks of chrominance samples and corresponding syntax elements regarding further subdividing of coding tree blocks. A coding tree block of luminance samples may have a size of 16x16 pixels, 32x32 pixels or 64x64 pixels. Each coding tree block can be further subdivided into smaller blocks (known as coding blocks CB) using a tree structure and quadtree-like signaling.

The NRT table may use a depth level of the coding tree structure for signaling the continuities / discontinuities. For blocks with greater depth, i.e. for smaller blocks, no continuity/discontinuity is signaled. Typically, the NRT table could comprise information on a CTU level for signaling. In that case, a region for the NRT table corresponds to a CTU.

Alternatively, a region from the NRT table may represent more than one CTU. A region may also correspond to tiles or slices defined in the 2D picture.

As an example, for a 3D surface represented as a sphere, the whole 2D picture may correspond to one region only.

According to another example, for a 3D surface represented as a cube, each projected face of the cube on the 2D picture may correspond to one region. Figure 18 illustrates such regions in the case of a 3D surface represented as a cube. The 2D picture, thus, comprises 6 regions (A, B, C, D, E, F) corresponding each to the projection of the faces of the cube, and re-arranged according to a regular grid. Table 2 below illustrates an NRT table for the 2D picture illustrated on figure 18.

Line and Column indexes are used to identify the regions. Here raster scan order is used, but Z-scan or other scan may be used to identify the regions location inside the picture.

The NRT table stores for at least one region of the 2D picture (first column) at least one item of information representative of a modification of a 2D spatial neighborhood of the region (second and third columns).

For a given region of the 2D picture (first column) and a given neighboring region (second column), if there is a continuity change in the 2D picture, the syntax indicates which region (third column) replaces the given neighboring region (second column), or an empty sign indicates that the given neighboring region is not replaced.

According to an embodiment, a rotation parameter (fourth column) to apply to the replacing region is associated in the NRT table to the replacing neighboring region if necessary.

According to an embodiment, the NRT table also stores for each region of the 2D picture for which there is modification of the neighborhood, to which encoding/decoding modules the neighborhood's modification applies. According to this embodiment, the neighborhood's modification may not apply to all encoding modules.

Such encoding modules may be an intra prediction module for spatially predicting a current block (Intra pred), a module for deriving a Most Probable Mode for coding an intra prediction coding mode for a current block (MPM), a module for deriving a motion vector predictor (MV pred), a deblocking filtering module, a sample adaptive offset filtering module (SAO), etc...

| Region (line,column) | Neighbor region (line,column) | Replacement region (line,column) | Rotation (trigonometric) (0,90,180,270°) | Encoding modules (Intra pred, MPM, MV pred,...) |
|---|---|---|---|---|
| B (0,1) | A (0,0) | Ø | - | MPM, mv pred |
| C (0,2) | B (0,1) | Ø | - | MPM, mv pred |
| D (1,0) | A (0,0) | A (0,0) | 180° | Intra pred |
| D (1,0) | A (0,0) | Ø | - | MPM, mv pred |
| D (1,0) | - (1,-1) | B (0,1) | 270° | Intra pred |
| D (1,0) | - (1,-1) | Ø | - | MPM, mv pred |
| D (1,0) | -(2,0) | C (0,2) | - | MPM, mv pred |
| E (1,1) | B (0,1) | A (0,0) | 90° | Intra pred |
| E (1,1) | B (0,1) | Ø | - | MPM, mv pred |
| E (1,1) | D (1,0) | Ø | - | MPM, mv pred |
| E (1,1) | -(1,2) | C (0,2) | - | MPM, mv pred |
| F (1,2) | C (0,2) | A (0,0) | 0° | Intra pred |
| F (1,2) | C (0,2) | Ø | - | MPM, mv pred |
| F (1,2) | E (1,1) | Ø | - | MPM, mv pred |
| F (1,2) | -(2,2) | Ø | - | MPM, mv pred |
| F (1,2) | -(1,3) | B (0,1) | - | MPM, mv pred |

**Table 2: example of NRT table**

The NRT table may comprise an item of information representative of a modification of a 2D spatial neighborhood indicating for a current region, a neighbor replacing region to be used instead of a neighbor region spatially adjacent to said current region in said 2D picture. For instance, in table 2, for current region E, region A is to be used instead of region B by an intra prediction module (i.e. spatially predicting the samples of a current block to encode).

The NRT table may also comprise an item of information indicating for a current region, a neighbor replacing region to be used instead of a non-available region spatially adjacent to said current region in said 2D picture. For instance, in table 2, for current region D, region B is to be used by the intra prediction module as left neighborhood of region D, although no region is available on the left of region D.

The NRT table may also comprise an item of information representative of a modification of a 2D spatial neighborhood indicating for a current region, an empty replacing region to be used instead of a neighbor region spatially adjacent to said current region in said 2D picture, wherein said empty replacing region is a region comprising no block from said 2D picture. Such an embodiment introduces discontinuities in the 2D picture. Indeed, even if a region has a spatially adjacent neighbor, this neighbor is not considered during the encoding. In that case, the neighboring region is just de-activated and it is indicated in the NRT table with an empty sign. For example, in table 2 and in figure 18, region F should not use region E as a neighbor when considering the MPM derivation or motion vector prediction.

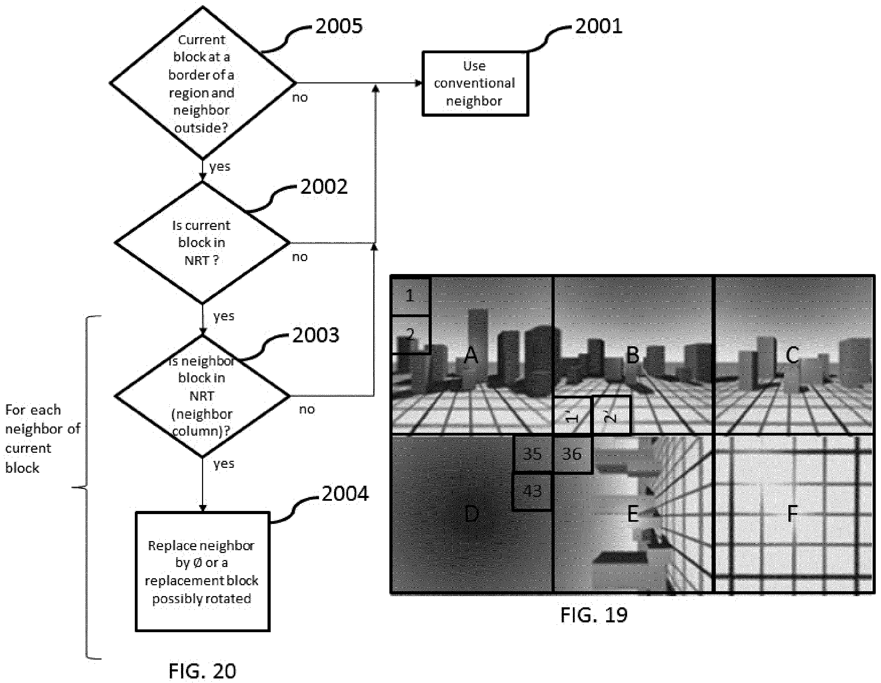

In a step 1701, for a current block of the 2D picture to be coded, block neighborhood is derived. For instance, such a derivation is illustrated in figure 20, discussed here below. This process may be performed once for each current block, or at each stage of the encoding or decoding process applied to the current block, as the neighboring blocks used for coding/decoding a current block may change according to the encoding/decoding module currently processing the current block.

In a step 2005, it is determined if the current block is located at a border of a region from the 2D picture and if at least one neighbor of the current block is located outside the region.

If the answer is yes to the test of step 2005, it is determined, in a step 2002, whether the current block belongs to a region for which neighborhood adaptation is specified in the NRT table. For instance, block 36 for the 2D picture illustrated in figure 19 is considered, block 36 belongs to region E of the 2D picture and the NRT table specifies at least one item of information representative of a modification for region E.

Then, in a step 2003, it is determined for each neighbor of the current block, if the neighbor belongs to a region for which neighborhood adaptation is specified in the NRT table. For instance, for an intra prediction process, intra picture prediction uses the previously decoded boundary samples from spatially neighboring blocks to form a prediction signal. Such neighboring blocks are the neighbors on the left, on the left below, above, and on the right above the current block are considered.

In a step 2004, if the current neighbor of the current block belongs to a region for which neighborhood adaptation is specified in the NRT table, it is determined a replacing block for the neighboring block if a replacing region is specified in the NRT table, otherwise it is determined that no block is available for replacing the current neighboring block. When transformation (e.g. a rotation) parameters are associated to a neighboring replacing region, such transformation parameters are applied to the determined replacing block in step 2004. Steps 2003 and 2004 allows to determine a group of neighboring blocks using the item of information representative of a modification stored in the NRT table. For instance, as illustrated on figure 19, a left neighboring block of block 36 is the block 35 and a below left neighbor of block 36 is block 43. Blocks 35 and 43 belong to region D for which no item of information representative of a modification is stored in the NRT table for the current region E and for neighboring region D in case of intra prediction. Therefore, the left and below left neighboring blocks of block 36 remain respectively blocks 35 and 43.

As illustrated on figure 19, the above and above right neighboring blocks of block 36 are blocks belonging to region B for which an item of information representative of a modification is stored in the NRT table for the current region E and for neighboring region B in case of intra prediction. From the item of information representative of a modification stored in the NRT table, the above and above right neighboring blocks of block 36 are determined respectively to be blocks 1' and 2' corresponding respectively to blocks 1 and 2 of region A rotated by an angle of 90° inverse clock-wise. Therefore, the blocks 1 and 2 of the 2D picture are stored in a memory and undergo a rotation of 90° inverse clock-wise. For that, in the case of intra-prediction, the first column of block 1, respectively block 2, is re-written as a last line of block 1', respectively block 2', as for intra prediction only the sampled from the last lines of the above and above right blocks are used for generating a predicted block.

When the answer is no to any one of the steps 2005, 2002 or 2003, a conventional neighborhood is derived for the current block, in a step 2001. For example as illustrated in figure 15 for a current block BK, the group of neighboring blocks for intra prediction may be blocks A, B, C and D.

Back to figure 17, at the end of step 1701, the group of neighboring blocks for the current block 36 comprises block 35 as left neighboring block, block 43 as below left neighboring block, block 1' as above neighboring block and block 2' as above right neighboring block, for performing intra prediction for block 36.

In a step 1702, at least one part of an encoding process for coding said current block into said bitstream using said determined group of neighboring blocks is performed. For instance, intra prediction is performed for the current block according to the HEVC coding scheme using the determined group of neighboring blocks. Such intra prediction technique is well known to those skilled in the art. It comprises determining a predicted block for the current block from the neighboring blocks depending on an intra prediction mode. The intra prediction mode is selected among several directional prediction modes (indexed from 2 to 34 in HEVC) corresponding to 33 directional orientations, a planar prediction mode (indexed 0) and a DC prediction mode (indexed 1). According to a particular embodiment of the disclosure, in a step 1703, the NRT table is coded into the bitstream so that a decoder can use the same items of neighboring information for reconstructing the 2D picture from the bitstream.

According to a variant, the NRT table is coded in a Sequence Parameter Set syntax element such as defined by an H.264/AVC standard or an HEVC standard. According to another variant, the NRT table is coded in a Picture Parameter Set syntax element such as defined by an H.264/AVC standard or an HEVC standard. According to another variant, the NRT table is coded in a Slice Header syntax element corresponding to said 2D picture, such as defined by an H.264/AVC standard or an HEVC standard.

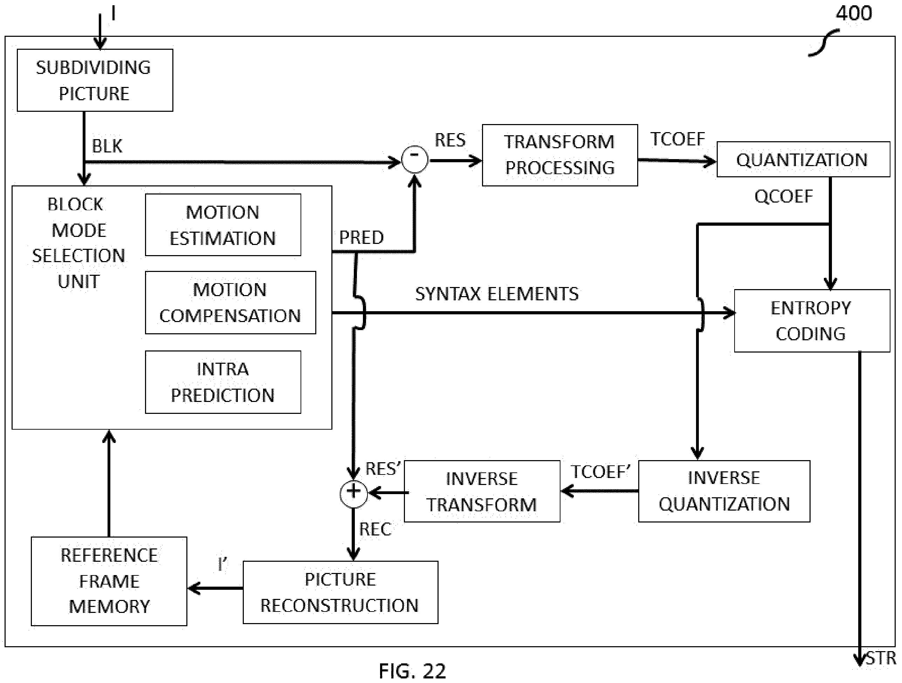

The present principle has been explained above in the case of intra prediction performed for a current block. However, such a principle may be applied to other encoding/decoding modules processing the current block as will be detailed further below in reference to figure 22.

Figure 22 is a schematic block diagram illustrating an exemplary video encoder 400. Such a video encoder 400 performs the encoding into a bitstream of a set of pictures representative of a projection of an omnidirectional video, according to an embodiment of the present principle. The video encoder 400 performs the encoding of the pictures according to any video coding standards such as H.266, HEVC/H.265, AVC/H.264 or any proprietary video coding system.

Classically, the video encoder 400 may include several modules for block-based video encoding, as illustrated in figure 22. A 2D picture I representative of a projected picture from an omnidirectional, video to be encoded is input to the encoder 400.

Firstly, a subdividing module divides the picture I into a set of units of pixels.

Depending on the video coding standard used, the units of pixels delivered by the subdividing module may be macroblocks (MB) such as in H.264/AVC or Coding Tree Unit (CTU) such as in HEVC.

According to an HEVC coder, a coding tree unit comprises a coding tree block (CTB) of luminance samples and two coding tree blocks of chrominance samples and corresponding syntax elements regarding further subdividing of coding tree blocks. A coding tree block of luminance samples may have a size of 16x16 pixels, 32x32 pixels or 64x64 pixels. Each coding tree block can be further subdivided into smaller blocks (known as coding blocks CB) using a tree structure and quadtree-like signaling. The root of the quadtree is associated with the coding tree unit. The size of the luminance coding tree block is the largest supported size for a luminance coding block. One luminance coding block and ordinarily two chrominance coding blocks form a coding unit (CU). A coding tree unit may contain one coding unit or may be split to form multiple coding units, and each coding unit having an associated partitioning into prediction units (PU) and a tree of transform unit (TU). The decision whether to code a picture area using inter picture or intra picture prediction is made at the coding unit level. A prediction unit partitioning structure has its root at the coding unit level. Depending on the basic prediction-type decision, the luminance and chrominance coding blocks can then be further split in size and predicted from luminance and chrominance prediction blocks (PB). The HEVC standard supports variable prediction block sizes from 64x64 down to 4x4 samples. The prediction residual is coded using block transforms. A transform unit (TU) tree structure has its root at the coding unit level. The luminance coding block residual may be identical to the luminance transform block or may be further split into smaller luminance transform blocks. The same applies to chrominance transform blocks. A transform block may have size of 4x4, 8x8, 16x16 or 32x32 samples.

The encoding process is described below as applying on a unit of pixels that is called a block BLK. Such a block BLK may correspond to a macroblock, or a coding tree unit, or any sub-block from one of the units described above, or any other layout of subdivision of picture I comprising luminance samples and chrominance samples, or luminance samples only.

The encoding and decoding processes described below are for illustration purposes. According to some embodiments, encoding or decoding modules may be added, or removed or may vary from the following modules. However, the principle disclosed herein could still be applied to these embodiments.

The encoder 400 performs encoding of each block of the picture I as follows. The encoder 400 comprises a mode selection unit for selecting a coding mode for a block BLK of a picture to be coded, e.g. based on a rate/distortion optimization. Such a mode selection unit comprising:

- a motion estimation module for estimating motion between one current block of the picture to be coded and reference pictures,
- a motion compensation module for predicting the current block using the estimated motion,
- an intra prediction module for spatially predicting the current block.

The mode selection unit may also decide whether subdivision of the block is needed according to rate/distortion optimization for instance. In that case, the mode selection unit then operates for each sub-block of the block BLK.

The principle described in relation with figures 17 and 20 may be applied by the intra prediction module as already discussed.

The disclosed principle may also be applied by the mode selection unit when determining a most probable mode list for coding an intra prediction coding mode for the current block BLK. The HEVC standards specifies 33 directional prediction modes (indexed from 2 to 34) corresponding to 33 directional orientations, a planar prediction mode (indexed 0) and a DC prediction mode (indexed 1), resulting in a set of 35 possible intra prediction mode for spatially predicting a current block. To reduce the signaling bitrates needed to signal which intra prediction mode is used for coding a current block, a most probable mode (MPM) list is constructed. The MPM list comprises the three most probable intra prediction mode for the current block. These three MPM are determined according to intra prediction modes used for coding neighboring blocks of the current block. Only the left and above neighboring blocks of the current block are considered in this process.

For deriving the three MPM from the neighboring blocks of the current block, the following applies:
- if the neighboring blocks of the current block are not available, their intra prediction mode are assigned to be DC prediction mode;

- then the table 3 below indicates the determination of the three MPM (MPM0, MPM1, MPM2): in which L stands for the intra prediction mode of the left neighboring block, and A stands for the intra prediction mode of the above neighboring block, L+1 and L-1 stand for the intra prediction mode located after or before the index of intra prediction mode of the left neighbor, from the set of 35 intra prediction modes:

**Table 3 MPM derivation in HEVC**

| Conditions | | | MPM0 | MPM1 | MPM2 |
|---|---|---|---|---|---|
| L=A | L≠Planar and L≠DC | | L | L+1 | L-1 |
| | Otherwise | | Planar | DC | 26 (Ver) |
| L≠A | L≠Planar and otherwise | R≠Planar | L | A | Planar |
| | | L≠DC and R≠ DC | L | A | DC |
| | | otherwise | L | A | 26 (Ver) |

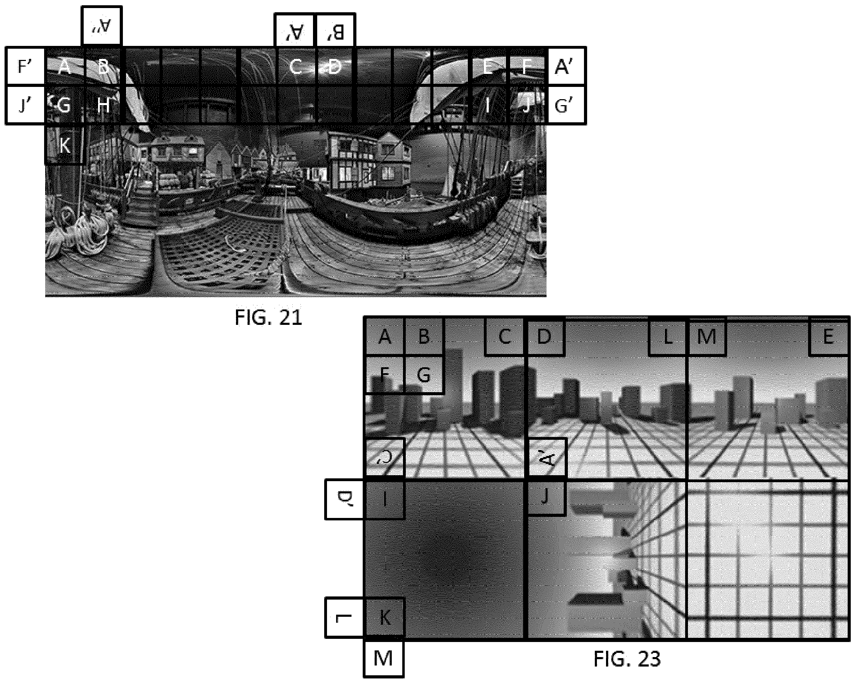

For instance for a block I illustrated in figure 23, in the conventional HEVC scheme, the left neighbor is not available, therefore, intra prediction mode for left neighbor is assigned to be DC prediction mode. Then, the MPM list is deduced from table 3, for instance if the above neighboring block of I has an intra prediction mode corresponding to a Planar mode, the MPM list is {DC, Planar, 26 (ver)}.

Using the NRT table 2 and the process described in figures 17 and 20, the above block is set to the intra prediction mode of the block C', such intra prediction mode of block C' corresponding to the intra prediction mode of block C rotated by 180 degree. The left block is set to the intra prediction mode of block D', such intra prediction mode of block D' corresponding to the intra prediction mode of block D rotated by 90 degree. For example, if the intra prediction mode of block D is mode 10 (horizontal intra prediction), then the corresponding intra prediction mode rotated by 90° is mode 26 (vertical intra prediction mode). The block D' is then assigned mode 26 as intra prediction mode.

Using Table 3, the new MPM list is then derived for the current block, depending on the intra prediction mode of blocks C' and D'. Note that, when replaced, a block can also be replaced by DC (no block available) when a new discontinuity is introduced (i.e. an existing neighboring block is de-activated) or when the block is not available.

The disclosed principle may also be applied by the mode selection unit in the derivation process of a motion vector predictor for coding a motion vector for the current block, when the current block is predicted by motion-compensated inter picture prediction.

In HEVC standard, motion vector prediction uses neighboring blocks located below left, left, above left, above and above right to the current block. A set of motion vectors comprising the motion vector of these neighboring blocks is constructed. Then, a motion vector predictor is selected from this set, for instance according to a rate/distortion comprise. A residual motion vector is computed as a difference between the motion vector of the current block and the selected motion vector predictor. The residual motion vector and an index indicating the selected motion vector from the set is transmitted to the decoder so that the decoder can reconstruct the motion vector of the current block from the decoded residual and selected motion vector predictor.

The process disclosed in figures 17 and 20 may be applied to the neighborhood of the current block used for motion vector prediction. For a replacing neighboring block, its motion vector is thus taken as a predictor instead of the motion vector of the replaced block. When a rotation of angle a is specified in the NRT table, then the motion vector (dx,dy) of the replacing neighboring block is rotated as follows:

$$dx'=\cos(a)dx+\sin(a)dy$$

dy'=-sin(a)dx+cos(a)dy, where (dx',dy') is the rotated motion vector of the replacing neighboring block. The rotated motion vector is then added to the set of motion vector predictors.

The disclosed principle may also be applied by the mode selection unit in a process of motion vector derivation for coding a motion vector of a current block when the current block is coded using motion-compensated inter picture prediction.

The NRT table can be used for reducing the amplitude of a motion vector to be coded when such motion vector points to a block belonging to a region for which neighborhood adaptation has been specified in the NRT table. For instance, in figures 24A and B, the motion vector u is replaced by the motion vector v, using the NRT table to benefit from the continuities of the layout.

From the NRT table, it can be determined that the motion vector u points from the current block towards a block which is used as a replacing neighboring block for a spatially adjacent block of the current block. Therefore, a new motion vector v pointing from the current block towards the position of the spatially adjacent block of the current block can be computed. In some cases, the amplitude of the new motion vector v is lower than the motion vector u and thus can be coded at lower cost.

In the Equirectangular layout, the motion vector u is replaced by the motion vector v that cross the continuity at the left of the picture to indicate the same block as vector u.

In the cube projection layout, the vector u, starting from left face, indicate a block in bottom face. It can be replace by the vector v, using NRT, which cross the continuity at the bottom of left face, and continue in bottom face to indicate the same block as vector u.

According to the transformation parameters stored in the NRT table, the replacing neighboring block is rotated accordingly when making the predicted block for the current block using the replaced motion vector.

Back to figure 22, once a coding mode is selected for the block BLK, the mode selection unit delivers a predicted block PRED and corresponding syntax elements to be coded in the bitstream for performing the same block prediction at the decoder.

A residual block RES is then obtained by subtracting the predicted block PRED from the original block BLK.

The residual block RES is then transformed by a transform processing module delivering a transform block TCOEF of transformed coefficients. Each delivered transform block TCOEF is then quantized by a quantization module delivering a quantized transform block QCOEF of quantized residual transform coefficients.

The syntax elements and quantized residual transform coefficients of the block QCOEF are then input to an entropy coding module to deliver the coded video data of the bitstream STR.

The quantized residual transform coefficients of the quantized transform block QCOEF are processed by an inverse quantization module delivering a block TCOEFF' of unquantized transform coefficients. The block TCOEF' is passed to an inverse transform module for reconstructing a block of residual prediction RES'.

A reconstructed version REC of the block BLK is then obtained by adding the prediction block PRED to the reconstructed residual prediction block RES'. The reconstructed block REC is stored in memory for later use by a picture reconstruction module for reconstructing a decoded version I' of the picture I. Once all the blocks BLK of the picture I have been coded, the picture reconstruction module performs reconstruction of a decoded version I' of the picture I from the reconstructed blocks REC. Optionally, deblocking filtering may be applied to the reconstructed picture I' for removing blocking artifacts between reconstructed blocks.

The principle disclosed in figure 17 and 20 may also be applied in the deblocking filtering process as follows. According to an embodiment of the present disclosure, deblocking filter is used on continuities and disabled on discontinuities. The NRT table is used for determining replacing neighboring block from which samples are to be taken for filtering boundary samples of the current block and for determining that deblocking is de-activated for the samples for which there is no replacing neighboring block.

For each boundary of the current block to deblock, if the block belongs to region specified in the NRT and the boundary is between the current block and a replacing block, the replacing block, if available, and possibly rotated is used instead of the regular neighboring block.

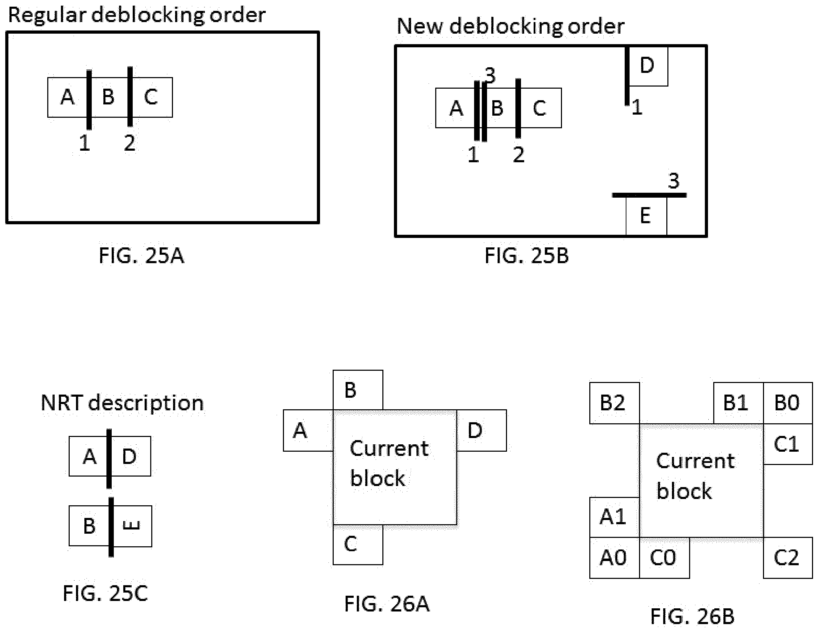

Figure 25A illustrates regular deblocking filtering as it is applied on vertical edges according to conventional video coder. For example, the boundary between blocks A and B is first deblocked, and then the boundary between B and C is deblocked. Figure 25B illustrates the adapted deblocking filtering when the NRT description illustrated on figure 25C is used according to the present principle. The NRT table indicates D as the right neighbor of block A, therefore the deblocking process is applied between blocks A and D (line 1 on figure 25B). As the left boundary of block B has not been deblocked yet, it is a candidate for deblocking. In the NRT table, the block E is the replacement for the left neighbor of B. Depending on the decoding order, the block E might not be available at this time, so the deblocking is not performed. Later, when examining the block E for deblocking, the top boundary is a candidate to be deblocked, using a rotated version of the block B as a top neighbor.

The principle disclosed in figure 17 and 20 may also be applied to the SAO process as defined in the HEVC standard. In HEVC, for each CTU, Sample Adaptive Offset (SAO) uses all 8 neighboring CTUs of the current CTU. In the case where some neighbors on the boundary of the CTU are noted as replaced/unavailable the block on the boundary are replaced accordingly with the NRT table. Alternatively, in order to limit the number of CTU in memory, a syntax element can be introduced in order to forbid the SAO process on the pixel of the boundary for which the neighboring block is replaced.

Back to figure 22, once the reconstructed picture I' has been deblocked and has undergone the SAO process, the resulting reconstructed picture is then added to a reference picture memory for later use as a reference picture for encoding the following pictures of the set of pictures to code.

The bitstream generated from the above-described encoding process is then transmitted over a data network or stored on a memory for immersive rendering of an omnidirectional video decoded from the bitstream STR.

Figure 23 illustrates additional spatial continuities defined in the NRT table disclosed in table 2 above for the cube projection. Such additional discontinuities were not available in conventional 2D video coding schemes.

As an example, block K from region D could benefit from neighboring blocks L and M from regions B and C respectively which have been previously coded/decoded when the blocks are scanned in a raster scan order for example. Therefore, according to an embodiment of the present disclosure, it is possible to benefit from already coded/decoded data for coding such kind of blocks. In other words, this embodiment allows to introduce new causal neighborhood for those blocks.

The NRT table disclosed in table 2 has been disclosed in the case of a cube projection. But the present disclosure may apply to other type of projection. For instance, table 4 below illustrates an example of an NRT table corresponding to an equi-rectangular projection for a 2D picture such as illustrated in figure 21.

| Region (line,column) | Neighbor region (line,column) | Replacement region (line,column) | Rotation (trigonometric) (0,90,180,270°) | Encoding modules (Intra pred, MPM, MV pred,...) |
|---|---|---|---|---|
| F (0,w-1) | - (0,w) | A (0,0) | 0° | All |
| J (1,w-1) | - (1,w) | G (1,0) | 0° | All |
| ... | | | | |

**Table 3: NRT table for equi-rectangular projection**

For example, in table 4, the first line of the table states that at the right border of the 2D picture, instead of having unavailable right neighbor, a new neighbor is made available (the first block of the same line).

Figure 21 illustrates, the same continuities between blocks as in figure 16A, and additional (causal) spatial continuity:

1- Block with an horizontal (causal) spatial neighbor: F (with A from the right), J (with G on the right)

2- Block with a vertical (causal) spatial neighbor: C (with block A rotated at 180 degrees), D (with block B rotated at 180 degrees). C (resp. D) is located at ½ image width of A (resp. B).

3- Block with a partial vertical (causal) spatial neighbors: block B has upper border similar to block A rotated at 180 degrees.

4- Block with diagonal (causal) spatial neighbors: G (with F from left), J (with A from right), K (with J from left).

Note that some of these spatial continuities may be unavailable in the case of special high level partitioning of the 2D picture by the video coding scheme (for example slice or tiles partitioning used for error resiliency or parallel decoding).

From figures 23 and 21 and tables 2 and 4, it appears that additional spatial continuities allows to take into account decoded information from blocks located on the right, and/or below and/or on the right-below and/or on the left-below of a current block.

According to an embodiment of the present disclosure, such new neighborhood (on the right, and/or below and/or on the right-below of a current block) is used for determining the neighborhood of a current block as disclosed with figure 20. In this process for deriving the neighborhood of a current block from the NRT table, the eight neighbors of the current are considered (on the left, above, on the left-above, on the right-above, on the right, below, on the right-below, on the left-below).

The new neighborhood can thus be used in determining a list of predictors for coding said current block. For instance, such list of predictors may be a list of MPM mode when the current block is intra-coded or a motion vector predictor list when the current block is inter-coded.

As illustrated in figure 26A, in the case of a list of MPM modes, when the left block (A) and/or the top block (B) of a current block are not available for determining a most probable mode for the current block, blocks D and C can be used instead of blocks A and B respectively. For instance, in table 2, it appears that MPM derivation has been de-activated for a left region of a region B(0,1), and that for MPM derivation region C(0,2) is added as a below neighbor for region D(1,0). Therefore, the intra prediction mode from the top block used in the MPM derivation can thus be replaced by the intra prediction mode from a block from region C(0,2) located below the current block.

From table 2, it is to be noted that for intra prediction, the left neighbor of region D(1,0) is replaced by a rotated version of region B(0,1), but that for MPM derivation, no left neighbor is available for region D(1,0). Therefore, a current block on the left border of region D(1,0) may be spatially predicted by samples from a block on the right border of a rotated version of region B(0,1), while the MPM list for coding the intra prediction mode used for predicting the current block is constructed using intra prediction mode of a block located in region C(0,2).

According to another embodiment, the new neighborhood allowed by the added spatial continuities can be used for determining a list of motion vector predictors for coding the motion vector of the current block. Figure 26B illustrates the blocks that can be used for deriving a motion vector prediction list according to an embodiment of the present disclosure. Blocks A0, A1, B0, B1 and B2 are the blocks that an HEVC video coding scheme conventionally uses for deriving the motion vector prediction list when a residual motion vector is coded for a current block.

According to the HEVC standard, a first motion vector predictor mvA is derived according to the motion information of blocks A0 and A1, and a second motion vector prediction mvB is derived according to the motion information of blocks B0, B1 and B2. When blocks A0 and A1 are not available, mvA is derived from motion information of blocks B0, B1 and B2. In the HEVC standard, the motion vector predictor list comprises two motion vector predictors. When the number of motion vector predictors in the list is less than two, a temporal motion vector from a co-located block in a reference picture is added to the list. A zero motion vector is also added to the list when the number of motion vector predictors in the list is still less than two, until this number is equal to two.

When coding the motion vector of the current block, one of the two motion vectors from the list is selected, and a residual motion vector is computed as a difference between the motion vector of the current block and the selected motion vector. Then, the residual motion vector is encoded into the bitstream. A flag indicating which motion vector predictor has been selected in the list is also coded into the bitstream. The decoder can thus reconstruct the motion vector of the current block from the motion vector residual decoded from the bitstream and the selected motion vector predictor.

From figure 26B, it can be noted that new blocks C0, C1 and C2 can be used for deriving a motion vector to be added to the list of motion vector predictors according to the present disclosure. For instance, when A1 is not available, A1 is replaced by C0, and the motion vector predictor mvA is derived from A0 and C0 according to the HEVC conventional process. When B2, respectively B1 is not available, B2, respectively B1, is replaced by C2, respectively C1. The motion vector predictor mvB is derived thus derived from B0, C1 and C2 according to the HEVC conventional process. Such an embodiment allows to benefit from new neighborhood in case conventional blocks are not available while not implying the need to add extra syntax element to signal new motion vector predictors as the number of motion predictor in the list is still two.

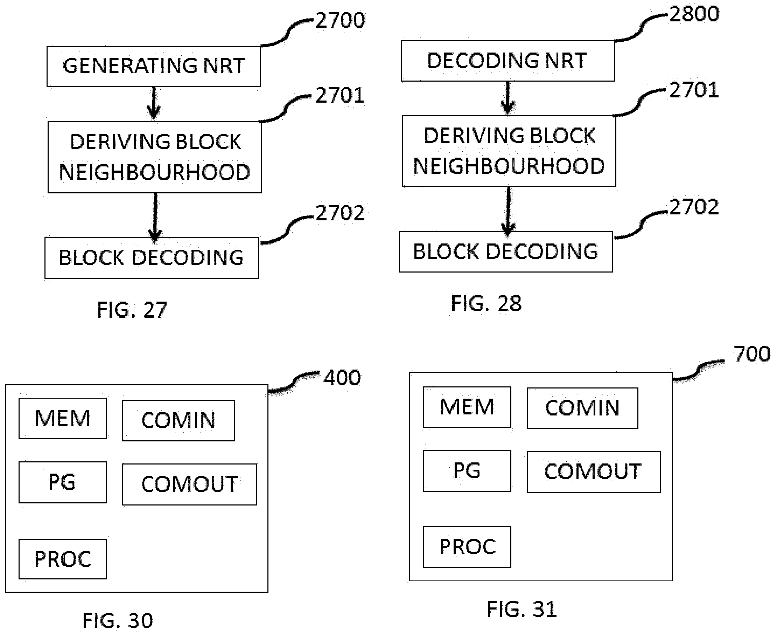

Figure 27 illustrates block diagram of an examplary method for decoding a current block of a 2D picture representative of a 3D picture of an omnidirectional video, from a bitstream according to an embodiment of the present disclosure.

According to this embodiment, in a step 2700, an NRT table is generated in a similar manner as in step 1700 described with figure 17.

According to a variant, the NRT table is generated from a projection function which is known by the decoder and thus no extra information is needed in the bitstream for generating the NRT table.

According to another variant, the projection function is not known from the decoder, and an item of information relating to said projection function is decoded from said bitstream. Such item of information may be decoded from a sequence parameter set, or a picture parameter set or a slice header of the 2D picture. The item of information may indicate the type of layout of the omnidirectional video into the 2D picture (equi-rectangular projection, cube projection...). The decoder is thus able to deduce from such information an NRT table corresponding to the one used in the encoding process of the 2D picture. According to a further variant, the bitstream may also comprise an item of information indicating a standardized method for generating the NRT table. For example, several methods could be used that provide each different possibilities for allowing continuities/discontinuities/additional continuities. As an example, in the cube projection, an above left block of a current block does not exist. An above left block of a front face could then be defined as being a block on the first row on the left face or a block on the last row of the top face of the cube. The present variant allows specifying how such a block is determined.

In a step 2701, the neighborhood of the current block is derived according to the deriving process disclosed in figure 20.

In a step 2702, at least one part of the decoding for reconstructing the block is performed using the neighborhood derived in step 2701. Such a part of decoding may be one of determining a spatial predicted block using at least one sample of a block belonging to the group of neighboring blocks determined in step 2701, determining a MPM list for decoding an intra prediction mode for the current block, deriving a motion vector predictor for reconstructing a motion vector for the current block, deblocking filtering a boundary of the current block, or sample adaptive offset filtering of the current block.

Figure 28 illustrates block diagram of an exemplary method for decoding a current block of a 2D picture representative of a 3D picture of an omnidirectional video, from a bitstream according to another embodiment of the present disclosure. According to this embodiment, in a step 2800, the NRT table is decoded from the bitstream and stored in memory. Then the decoding method steps are similar to those described in relation with figure 27 and are not detailed further here.

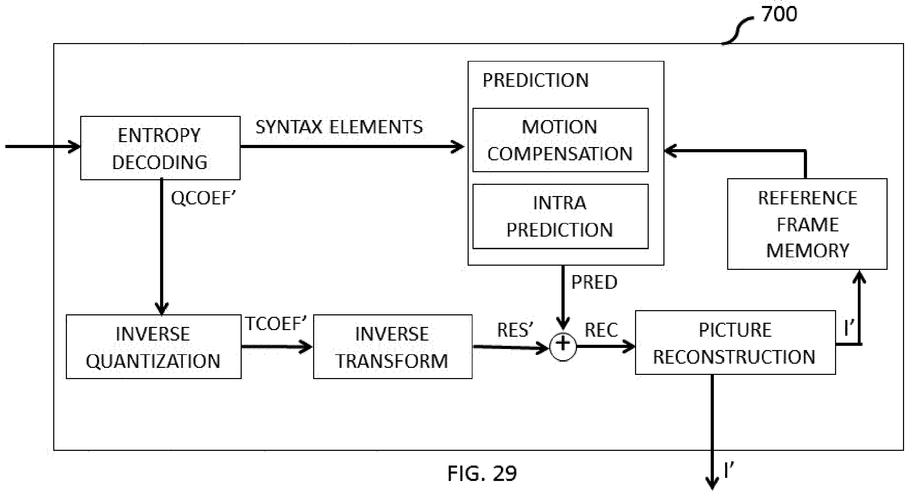

Any one of the embodiment of the methods disclosed with figures 27 or 28 can be implemented in an exemplary method for decoding a bitstream representative of an omnidirectional video, such as disclosed below and in figure 29, according to an embodiment of the present disclosure.

Figure 29 is a schematic block diagram illustrating an exemplary video decoder method adapted to decode a bitstream encoded using the present principle. A bitstream STR representative of coded pictures representative of a projection of an omnidirectional video onto said picture, comprises coded data representative of at least one block BLK of said pictures. Such a block may have been coded according to an embodiment of the present disclosure.

According to an embodiment, the bitstream STR may also comprise coded data representative of an item of information relating to the projection function or coded data representative of a NRT table generated at the encoder.

The video decoder 700 performs the decoding of the pictures, e.g. according to an HEVC video coding standard. The present principle may be applied to any video coding standards.

The video decoder 700 performs the reconstruction of the omnidirectional video by decoding from the bitstream the coded pictures on a picture-by-picture basis and decoding each picture on a block-by-block basis. According to video compression standards used, parallel processing may be used for decoding the bitstream either on a picture basis or on a block basis. A picture I' is thus reconstructed from the compressed bitstream as follows.

The coded data is passed to the video decoding modules of the video decoder 700. As illustrated in figure 29, coded data is passed to an entropy decoding module that performs entropy decoding and delivers a block QCOEF of quantized transform coefficients to an inverse quantization module and syntax elements to a prediction module.

The block QCOEF of quantized transform coefficients is inverse quantized by the inverse quantization module to deliver a block TCOEF' of dequantized transform coefficients.

The block TCOEF' of dequantized transform coefficients is inverse transformed by an inverse transform module delivering a residual prediction block RES'.

The prediction module builds a prediction block PRED according to the syntax element and using a motion compensation module if a current block has been inter-predicted or an intra prediction module if the current block has been spatially predicted. For building the prediction block, the prediction module may use the NRT table decoded from the bitstream or generate an NRT table from the item of information relating to the projection function, according to one of the embodiment disclosed with figures 27 or 28. The prediction module may then derive the block neighborhood according to any one of the embodiments disclosed herein in relation with figure 20, in a similar manner as the neighborhood derivation process performed at the encoder.

A reconstructed block REC is then obtained by adding the prediction block PRED to the reconstructed residual prediction block RES'. The reconstructed block REC is stored in memory for later use by a picture reconstruction module for reconstructing a decoded picture I'. Once all the blocks of the picture I have been decoded, the picture reconstruction module performs reconstruction of the decoded picture I' from the reconstructed blocks REC. Optionally, deblocking filtering may be applied to the reconstructed picture I' for removing blocking artifacts between reconstructed blocks. In case the process for deriving the neighborhood of the current block according to an embodiment of the present disclosure has been applied at the encoder, such process is also applied at the decoder.

Similarly, in the case where the process for deriving the neighborhood of the current block according to an embodiment of the present disclosure has been applied at the encoder in a module for adaptive sample offset filtering as defined in the HEVC standard, such SAO filtering is also applied at the decoder in a same way as the encoder.

The reconstructed picture I' is then stored in a reference picture memory for later use as a reference picture for decoding the following pictures of the set of pictures to decode.

The reconstructed picture I' is then stored on a memory or output by the video decoder apparatus 700 to an immersive rendering device (10) as disclosed above. The video decoder apparatus 700 may also be comprised in the immersive rendering device (80). In that case, the reconstructed picture I' is output by the decoder apparatus to a display module of the immersive rendering device (80).

According to the immersive rendering system implemented, the disclosed decoder apparatus may be comprised in any one of the processing devices of an immersive rendering system such as disclosed herein for instance, in a computer (40), or a game console (60), or a smartphone (701), or an immersive rendering device (80), or an immersive wall (6000).

The apparatus decoder 700 may be implemented as hardware or software or a combination of hardware and software thereof.

According to an embodiment of the present disclosure, the signaling of the decoding modules to which the present principle for deriving a neighborhood apply, may be performed using specific syntax elements in an SPS, PPS or Slice Header of the bitstream representative of the coded omnidirectional video. Such syntax element allows the decoder to known whether the neighborhood should be derived according to the disclosure or according to a conventional manner as defined in the HEVC standard for instance. This embodiment can be combined with the embodiment in which the NRT table is automatically derived from an item of information relating to the projection function.

Figure 30 illustrates the simplified structure of an apparatus (400) for coding an omnidirectional video according to an embodiment. Such an apparatus is configured to implement the method for coding an omnidirectional video according to the present principle which has been described here above in reference with figures 17 and 20.

According to an embodiment, the encoder apparatus comprises a processing unit PROC equipped for example with a processor and driven by a computer program PG stored in a memory MEM and implementing the method for coding an omnidirectional video according to the present principles.

At initialization, the code instructions of the computer program PG are for example loaded into a RAM (not shown) and then executed by the processor of the processing unit PROC. The processor of the processing unit PROC implements the steps of the method for coding an omnidirectional video which have been described here above, according to the instructions of the computer program PG.

The encoder apparatus comprises a communication unit COMOUT to transmit an encoded bitstream STR to a data network.

The encoder apparatus also comprises an interface COMIN for receiving a picture to be coded or an omnidirectional video to encode.

Figure 31 illustrates the simplified structure of an apparatus (700) for decoding a bitstream representative of an omnidirectional video according to an embodiment. Such an apparatus is configured to implement the method for decoding a bitstream representative of an omnidirectional video according to the present principle, which has been described here above in reference with figures 27, 28 and 20.

According to an embodiment, the decoder apparatus comprises a processing unit PROC equipped for example with a processor and driven by a computer program PG stored in a memory MEM and implementing the method for decoding a bitstream representative of an omnidirectional video according to the present principles.

At initialization, the code instructions of the computer program PG are for example loaded into a RAM (not shown) and then executed by the processor of the processing unit PROC. The processor of the processing unit PROC implements the steps of the method for decoding a bitstream representative of an omnidirectional video which has been described here above, according to the instructions of the computer program PG.

The apparatus may comprise a communication unit COMOUT to transmit the reconstructed pictures of the video data to a rendering device.

The apparatus also comprises an interface COMIN for receiving a bitstream STR representative of the omnidirectional video to decode from a data network, or a gateway, or a Set-Top-Box.


**Claims**

1. A method for coding a large field of view video into a bitstream, at least one picture of said large field of view video being represented as a surface, said surface being projected onto at least one 2D picture using a projection function, said method comprising, for at least one current block of said at least one 2D picture:

   - determining at least one item of information representative of a modification of a 2D spatial neighborhood according to said projection function,
   - determining a group of neighboring blocks using said at least one item of information,
   - performing at least one part of encoding of said at least one current block, using said determined group of neighboring blocks.

2. An apparatus for coding a large field of view video into a bitstream, at least one picture of said large field of view video being represented as a surface, said surface being projected onto at least one 2D picture using a projection function, said apparatus comprising, for at least one block of said at least one 2D picture:

   - means for determining at least one item of information representative of a modification of a 2D spatial neighborhood according to said projection function,
   - means for determining a group of neighboring blocks using said at least one item of information,
   - means for performing at least one part of encoding said at least one current block, using said determined group of neighboring blocks.

3. A method for coding according to claim 1 or an apparatus for coding according to claim 2, wherein said at least one item of information representative of a modification is stored in a neighbor replacement table, in association with an item of information representative of said at least one part of encoding.

4. A method for coding according to claim 1 or 3 or an apparatus for coding according to claim 2 or 3, wherein said at least one part of encoding belongs to a group comprising at least:

- determining a predicted block using at least one sample of a block belonging to said group of neighboring blocks,
- determining of a most probable mode list for coding an intra prediction mode for said at least one current block,
- deriving a motion vector predictor for coding a motion vector for said at least one current block,
- deriving a motion vector for coding a motion vector for said at least one current block,
- deblocking filtering between at least said one current block and a block belonging to said group of neighboring blocks,
- sample adaptive offset filtering between at least one sample of said at least one current block and at least one sample of a block belonging to said group of neighboring blocks.

5. A method for coding according to any one of claims claim 1 and 3-4 or an apparatus for coding according to any one of claims 2-4, wherein said 2D picture comprises at least one region of blocks, and wherein said at least one item of information representative of a modification is stored in said neighbor replacement table for a current region to which said at least one current block belongs, and wherein said at least one item of information representative of a modification belongs to a group comprising at least:

- a neighbor replacing region to be used instead of a neighbor region spatially adjacent to said current region in said 2D picture for determine said group of neighboring blocks,
- a neighbor replacing region to be used instead of a non-available region spatially adjacent to said current region in said 2D picture for determine said group of neighboring blocks,
- an empty replacing region to be used instead of a neighbor region spatially adjacent to said current region in said 2D picture for determine said group of neighboring blocks, wherein said empty replacing region is a region comprising zero block from said 2D picture.

6. A method for coding according to claim 5 or an apparatus for coding according to claim 5, wherein said item of information representative of a modification is stored in association with a transformation parameter to be applied to a neighbor replacing region.

7. A method for coding according to any claims 5-6 or an apparatus for coding according to any of claims 5-6, further comprising coding said neighbor replacement table into said bitstream.

8. A method for decoding a bitstream representative of a large field of view video, at least one picture of said large field of view video being represented as a surface, said surface being projected onto at least one 2D picture using a projection function, said method comprising, for at least one current block of said at least one 2D picture:

- determining at least one item of information representative of a modification of a 2D spatial neighborhood, according to said projection function,
- determining a group of neighboring blocks using said at least one item of information,
- performing at least one part of decoding said at least one current block, using said determined group of neighboring blocks.

9. An apparatus for decoding a bitstream representative of a large field of view video, at least one picture of said large field of view video being represented as a surface, said surface being projected onto at least one 2D picture using a projection function, said apparatus comprising, for at least one current block of said at least one 2D picture:

- means for determining at least one item of information representative of a modification of a 2D spatial neighborhood, according to said projection function,
- means for determining a group of neighboring blocks using said at least one item of information representative of a modification,
- means for performing at least one part of decoding said at least one current block from said bitstream, using said determined group of neighboring blocks.

10. A method for decoding according to claim 8 or an apparatus for decoding according to claim 9, wherein said at least one item of information representative of a modification, is stored in a neighbor replacement table, in association with at least one item of information representative of said at least one part of decoding.

**11.** A method for decoding according to claim 8 or 10 or an apparatus for decoding according to claim 9 or 10, wherein said at least one part of decoding belongs to a group comprising at least:

- determining a predicted block using at least one sample of a block belonging to said group of neighboring blocks,
- determining a most probable mode list for decoding an intra prediction mode for said at least one current block,
- deriving a motion vector predictor derivation for decoding a motion vector for said at least one current block,
- deblocking filtering between said at least one current block and a block belonging to said group of neighboring blocks,
- sample adaptive offset filtering between at least one sample of said at least one current block and at least one sample of a block belonging to said group of neighboring blocks.

**12.** A method for decoding according to any one of claims 8 or 10-11 or an apparatus for decoding according to any one of claims 9-11, wherein said 2D picture comprises at least one region of blocks, and wherein said at least one item of information representative of a modification, is stored in said neighbor replacement table for a current region to which said at least one current block belongs, and wherein said at least one item of information representative of a modification belongs to a group comprising at least:

- a neighbor replacing region to be used instead of a neighbor region spatially adjacent to said current region in said 2D picture for determine said group of neighboring blocks,
- a neighbor replacing region to be used instead of a non-available region spatially adjacent to said current region in said 2D picture for determine said group of neighboring blocks,
- an empty replacing region to be used instead of a neighbor region spatially adjacent to said current region in said 2D picture for determine said group of neighboring blocks, wherein said empty replacing region is a region comprising zero block from said 2D picture.

**13.** A method for decoding according to claim 12 or an apparatus for decoding according to claim 12, wherein said item of information representative of a modification, is stored in association with a transformation parameter to be applied to a neighbor replacing region.

**14.** A method for decoding according to any one of claims 12-13 and an apparatus for decoding according to any one of claims 12-13, further comprising decoding said neighbor replacement table from said bitstream.

**15.** A bitstream representative of a coded large field of view video, at least one picture of said large field of view video being represented as a surface, said surface being projected onto at least one 2D picture using a projection function, said bitstream comprising coded data representative of at least one current block of said 2D picture, said coded data being obtained by determining at least one item of information representative of a modification of a 2D spatial neighborhood according to said projection function, determining a group of neighboring blocks using said at least one item of information, performing at least one part of encoding of said at least one current block, using said determined group of neighboring blocks.

**16.** A computer program comprising software code instructions for performing the methods according to any one of claims 1, 4-8, 10-14, when the computer program is executed by one or several processors.

**17.** An immersive rendering device comprising an apparatus for decoding a bitstream representative of a video according to any of claims 9 to 14.

**18.** A system for immersive rendering of a large field of view video encoded into a bitstream, comprising at least:

- a network interface (600) for receiving said bitstream from a data network,
- an apparatus (700) for decoding said bitstream according to any of claims 9 to 14,
- an immersive rendering device (900).

EP 3 301 929 A1

Pre-Processing → Encoding → N/W I/R → N/W I/R → Decoding → Playing → Rendering

300    400    500    600    700    800    900

FIG. 1

Internet

GW

computer

10

sensors

User inputs

40

50

20

30

FIG. 2

FIG. 3

FIG. 4

EP 3 301 929 A1

FIG. 5

FIG.6

FIG. 7

FIG. 8

EP 3 301 929 A1

6000

5000

Internet

GW

Internet

Internet

7000

game console

game console

7000

User inputs

sensors

2000

3000

FIG. 9

10

101

102

display

104

touchpad

Communication I/f

processing

105

106

memory

camera

103

FIG. 10

70

Communication I/f
702

Smartphone housing
705

optics
704

FIG. 11

80

Communication I/f
806

display
801

touchpad
802

processing
804

805

memory

camera
803

FIG. 12

FIG. 13

FIG. 24B

FIG. 24A

FIG. 14A

FIG. 14B

FIG. 14C

FIG. 15

FIG. 16A

FIG. 16B

FIG. 16C

EP 3 301 929 A1

31

FIG. 17

FIG. 18

2005 — Current block at a border of a region and neighbor outside?

2001 — Use conventional neighbor

no →

yes ↓

2002 — Is current block in NRT?

no →

yes ↓

2003 — Is neighbor block in NRT (neighbor column)?

For each neighbor of current block

no →

yes ↓

2004 — Replace neighbor by Ø or a replacement block possibly rotated

FIG. 20

FIG. 19

FIG. 21

FIG. 23

Regular deblocking order

FIG. 25A

New deblocking order

FIG. 25B

NRT description

FIG. 25C

FIG. 26A

FIG. 26B

GENERATING NRT — 2700

↓

DERIVING BLOCK NEIGHBOURHOOD — 2701

↓

BLOCK DECODING — 2702

FIG. 27

DECODING NRT — 2800

↓

DERIVING BLOCK NEIGHBOURHOOD — 2701

↓

BLOCK DECODING — 2702

FIG. 28

400

| MEM | COMIN |
| PG | COMOUT |
| PROC | |

FIG. 30

700

| MEM | COMIN |
| PG | COMOUT |
| PROC | |

FIG. 31

FIG. 22

EP 3 301 929 A1

FIG. 29

EP 3 301 929 A1

Europäisches
Patentamt
European
Patent Office
Office européen
des brevets

**EUROPEAN SEARCH REPORT**

Application Number

EP 16 30 6263

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2016/012855 A1 (KRISHNAN RATHISH [US]) 14 January 2016 (2016-01-14)<br>* paragraph [0007] - paragraph [0047] *<br>----- | 1,2,4-9, 11-18<br>3,10 | INV.<br>H04N19/597<br>G06T3/00<br>H04N5/232<br>H04N19/176 |
| X<br>A | EP 1 441 307 A1 (SONY CORP [JP]) 28 July 2004 (2004-07-28)<br>* paragraph [0009] - paragraph [0028] *<br>* paragraph [0115] - paragraph [0161] *<br>----- | 1,2,4-9, 11-18<br>3,10 | H04N19/503<br>H04N19/593<br>H04N19/85<br>H04N19/70<br>H04N19/467 |
| A | WO 2016/076680 A1 (SAMSUNG ELECTRONICS CO LTD [KR]) 19 May 2016 (2016-05-19)<br>* paragraph [0031] - paragraph [0132] *<br>* figures 1-17 *<br>----- | 1-18 | |

TECHNICAL FIELDS
SEARCHED (IPC)

H04N
G06T

The present search report has been drawn up for all claims

| Place of search | Date of completion of the search | Examiner |
|---|---|---|
| Munich | 14 February 2017 | Ernst, Jens |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................
& : member of the same patent family, corresponding
    document

EPO FORM 1503 03.82 (P04C01)

**EP 3 301 929 A1**

## ANNEX TO THE EUROPEAN SEARCH REPORT
## ON EUROPEAN PATENT APPLICATION NO.

EP 16 30 6263

14-02-2017

| Patent document cited in search report | | | Publication date | Patent family member(s) | | Publication date |
|---|---|---|---|---|---|---|
| US 2016012855 | A1 | | 14-01-2016 | US | 2016012855 A1 | 14-01-2016 |
| | | | | WO | 2016010668 A1 | 21-01-2016 |
| EP 1441307 | A1 | | 28-07-2004 | CN | 1491403 A | 21-04-2004 |
| | | | | EP | 1441307 A1 | 28-07-2004 |
| | | | | JP | 2003141562 A | 16-05-2003 |
| | | | | KR | 20040050888 A | 17-06-2004 |
| | | | | US | 2004247173 A1 | 09-12-2004 |
| | | | | WO | 03038752 A1 | 08-05-2003 |
| WO 2016076680 | A1 | | 19-05-2016 | US | 2016142697 A1 | 19-05-2016 |
| | | | | WO | 2016076680 A1 | 19-05-2016 |

EPO FORM P0459

For more details about this annex : see Official Journal of the European Patent Office, No. 12/82